# FASCICULE DE BREVET EUROPEEN

(11) **EP 1 173 505 B1**
(45) Date de publication et mention de la délivrance du brevet: **17.10.2007**
(21) Numéro de dépôt: 00917131.5
(22) Date de dépôt: 05.04.2000
(51) Int. Cl.: C08K 5/00, C09D 183/06, C08J 7/04

(54) **COMPOSITION SILICONE UTILE NOTAMMENT POUR LA REALISATION DE VERNIS ANTI-FRICTION, PROCEDE D'APPLICATION DE CE VERNIS SUR UN SUPPORT ET SUPPORT AINSI TRAITE**
SILOXANZUSAMMENSETZUNG FÜR FRIKTIONS-REDUZIERENDE BESCHICHTUNG , VERFAHREN ZUM BESCHICHTEN EINES SUBSTRATS UND BESCHICHTETES SUBSTRAT
SILICONE COMPOSITION USED IN THE PRODUCTION OF ANTIFRICTION VARNISHES, METHOD FOR THE APPLICATION OF SAID VARNISHES TO A SUPPORT AND SUPPORT THUS TREATED

(30) Priorité: 06.04.1999 FR 9904421
(43) Date de publication de la demande: 23.01.2002
(73) Titulaire: RHODIA CHIMIE, 92512 Boulogne-Billancourt (FR)
(72) Inventeur: BERTRY, Jean-Louis, F-69008 Lyon (FR); FRANCES, Jean-Marc, F-69330 Meyzieu (FR); BOHIN, Fabrice, F-92300 Levallois Perret (FR); PRIOU, Christian, West Windsor, NJ 08550 (US)
(74) Mandataire: Fleurance, Raphaël
(86) Numéro de dépôt international: PCT/FR2000/000861
(87) Numéro de publication internationale: WO 2000/059992

(56) Documents cités:
- EP-A- 0 562 922
- EP-A- 0 702 106
- EP-A- 0 903 385
- WO-A-95/19394
- FR-A- 2 719 598
- FR-A- 2 724 660
- FR-A- 2 757 870

## Description

### DOMAINE TECHNIQUE

Le domaine général de l'invention est celui des revêtements ou vernis polymères aptes à conférer à des substrats, des propriétés anti-friction. Plus précisément, l'invention concerne des compositions silicones utiles notamment pour la réalisation de vernis applicables sur des supports, dont on cherche à diminuer le coefficient de friction. Les supports concernés sont divers et peuvent être notamment constitués :
➢ par des substrats fibreux, tissés ou non, revêtus d'au moins une couche de protection ou de renfort mécanique, à base de polymère d'enduction, du type élastomère silicone, par exemple;
➢ par des substrats polymères, en particulier des films plastiques, comme par exemple :
   - des rubans de transfert thermique utilisables notamment comme support d'encre dans des imprimantes à transfert thermique.
   - ou des films d'emballage de protection,

La présente invention vise également les procédés d'application du vernis anti-friction qu'elle concerne, sur différents supports.

Enfin, l'invention a pour objet les supports revêtus de tels vernis anti-friction et, en particulier :
➢ les toiles textiles revêtues d'une couche d'élastomère sur laquelle est appliqué le vernis anti-friction, de telles toiles étant susceptibles d'être utilisées pour la fabrication de coussins de protection individuelle d'occupants de véhicules, dénommés également "airbag",
➢ les rubans de transfert thermique, par exemple constitués par des films plastiques (e.g. en polyester) porteurs d'encre et utilisables dans des imprimantes à transfert thermique,
➢ les films d'emballage de protection.

### ART ANTERIEUR

La problématique générale à la base de l'invention est la mise au point d'un vernis silicone anti-friction. Ce problème de diminution des coefficients de friction, se pose avec une acuité particulière pour des substrats enduits de revêtements silicones élastomères réticulés. En effet, il est bien connu de l'homme de l'art que les couches d'enduction en silicone élastomère ont un toucher collant qui est pénalisant pour de nombreuses applications.
S'agissant plus précisément de l'application "airbag", on sait que ces coussins gonflables de protection individuelle d'occupants de véhicules, sont réalisés à partir d'une toile en fibre synthétique, par exemple en polyamide (nylon^{®}), recouverte sur au moins l'une de ses faces d'une couche d'un élastomère qui peut être un élastomère silicone réticulable ou vulcanisable à froid par polyaddition (EVFII), polycondensation (EVFI), d'un élastomère silicone réticulable ou vulcanisable à chaud par polycondensation au peroxyde ou par polyaddition (EVC) ou d'un élastomère silicone visqueux réticulable ou vulcanisable par polyaddition du type LSR.

Ce revêtement de protection par exemple en silicone est au moins interne et permet de se prémunir des effets de l'explosion de gonflage du coussin. Le fait que le revêtement silicone élastomère ait un toucher collant constitue un frein au déploiement du coussin. L'amélioration de l'efficacité des "airbags" passe donc par leur réalisation en matériau enduit à faible coefficient de friction.

Pour plus de détails sur les coussins de protection individuelle, on peut se référer notamment au brevet français N° 2 668 106 et plus spécialement au brevet français N° 2 719 598 pour les "airbags" revêtus d'un élastomère silicone RTV réticulable par polyaddition.

Cette recherche de faible coefficient de friction pour des revêtements de substrats enduits ou non d'élastomère silicone, est également un souci dans d'autres applications comme,, par exemple, les revêtements pour rubans à transfert thermique (e.g. en polyester) ou bien encore les films d'emballage de protection (e.g. en polyéthylène ou en polypropylène.

Les rubans de transfert thermique sont utilisables dans des imprimantes à transfert thermique. Ces rubans de transfert thermique sont très fins (quelques microns) et sont revêtus, sur l'une de leurs faces, d'une couche d'encre (cires ou résines) et sur l'autre de leurs faces, d'un revêtement de protection. On utilise en général un revêtement de protection très fin d'épaisseur comprise entre 0,1 et 1 micromètre pour protéger la surface du film et améliorer l'impact de la tête d'impression sans déformer le transfert de l'encre sur le support appliqué.

Dans des imprimantes dont la vitesse d'impression est comprise entre 150 et 300 mm/s, il est très important que la tête d'impression (plate ou en coin), lorsqu'elle frappe le revêtement de protection du ruban, puisse glisser sur la surface du revêtement, à une température élevée comprise entre 100 et 200 °C.

S'agissant des films d'emballage de protection, on prévoit parfois de leur appliquer un sur-vernissage à base de silicone, afin de leur conférer des propriétés d'anti-adhérence. Mais il convient que ce sur-vernissage possède un glissant au moins équivalant à celui du film plastique de départ (imprimé ou non).

### BREF EXPOSE DE L'INVENTION

Face à cette problématique, l'un des objectifs essentiels de la présente invention est de proposer de diminuer le coefficient de friction de substrat éventuellement revêtu de couche d'enduction, par exemple en silicone, à l'aide d'un vernis anti-friction.

Un autre objectif essentiel de la présente invention est de fournir un vernis antifriction applicable aisément sur divers types de substrats.

Un autre objectif essentiel de l'invention est de fournir un vernis anti-friction réticulable, facile à mettre en oeuvre et économique.

Un autre objectif essentiel de l'invention est de fournir une composition silicone utilisable notamment pour la réalisation de vernis anti-friction du type de ceux sus-évoqués.

Un autre objectif essentiel de la présente invention est de fournir une composition silicone utile notamment pour la réalisation de vernis anti-friction, cette composition se devant d'être d'un coût de revient raisonnable et simple à préparer.

Un autre objectif essentiel de l'invention est de fournir un vernis anti-friction constitué par une composition silicone réticulable, apte à réduire significativement le coefficient de friction de divers types de substrats enduits ou non.

Un autre objectif de l'invention est de fournir un procédé d'application simple et économique d'un vernis anti-friction à base d'une composition silicone, sur différents supports formés, par exemple, par des substrats fibreux tissés ou non et éventuellement enduits, par exemple, d'une couche d'élastomère silicone réticulé.

Un autre objectif essentiel de l'invention est de fournir une toile enduite d'élastomère silicone réticulé destiné à la fabrication "d'airbags", une telle toile se devant de présenter un faible coefficient de friction.

Un autre objectif essentiel de l'invention est de fournir une toile enduite de silicone élastomère réticulé pour la fabrication "d'airbags", revêtue d'un vernis anti-friction à base d'une composition silicone.

Un autre objectif essentiel de l'invention est de proposer un support fibreux, par exemple un tissu, enduit d'un revêtement élastomère réticulé et doté d'un coefficient de friction statique (Ks) correspondant à l'effort nécessaire pour initier le déplacement d'une masse rectangulaire recouverte du tissu concerné sur un support plan en verre à une valeur Ks ≤ 1, pour un dépôt d'enduction toutes couches confondues D < 20 g/m².

Ces objectifs, parmi d'autres, sont atteints par la présente invention qui concerne, en premier lieu, une composition silicone utile notamment pour la réalisation de vernis ayant en particulier des propriétés anti-friction, cette composition étant du type de celles comprenant au moins un polyorganosiloxane (POS) réticulable par l'intermédiaire de groupements fonctionnels de réticulation (GFR) par voie cationique et/ou radicalaire choisis parmi les groupements comprenant au moins une fonction éthyléniquement insaturée acrylate et/ou alcényléther et/ou époxyde et/ou oxéthane et une quantité efficace de système amorceur cationique comprenant comme amorceur thermique et/ou photoamorceur, un produit choisi parmi les sels d'onium d'un élément des groupes 15 à 17 de la classification périodique [Chem & Eng. News, vol. 63, N° 5, 26 du 4 février 1985] ou d'un complexe organométallique d'un élément des groupes 4 à 10 de la classification périodique [même référence],
Δ dont *l'entité cationique* est sélectionnée parmi :
   - 1) les sels d'onium de formule (I) :

      [(R¹)ₙ- A - (R²)ₘ]⁺ (I)

      formule dans laquelle :
      - A représente un élément des groupes 15 à 17 tel que par exemple : I, S, Se, P ou N,
      - R¹ représente un radical aryle carbocyclique ou hétérocyclique en C₆-C₂₀, ledit radical hétérocyclique pouvant contenir comme hétéroéléments de l'azote ou du soufre ;
      - R² représente R¹ ou un radical alkyle ou alkényle linéaire ou ramifié en C₁-C₃₀ ; lesdits radicaux R¹ et R² étant éventuellement substitués par un groupement alcoxy en C₁-C₂₅, alkyle en C₁-C₂₅, nitro, chloro, bromo, cyano, carboxy, ester ou mercapto ;
      - n est un nombre entier allant de 1 à v + 1, v étant la valence de l'élément A,
      - m est un nombre entier allant de 0 à v - 1 avec n + m = v + 1,
   2) les sels d'oxoisothiochromanium décrits dans la demande de brevet WO 90 11303**,** i.e. les sels de 4-oxoisothiochromanium de formule structurale V, 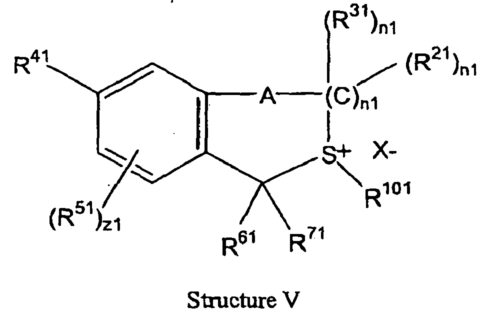 notamment le sel de sulfonium du 2-éthyl-4-oxoisothiochromanium ou de 2-dodécyl-4-oxoisothiochromanium, dans laquelle
      A représente 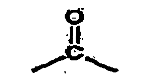 n1 = 1
      z1 = un entier entre 0 et 3
      X représente un groupe de formule M¹Y¹ᵣ₁ (1) ou de formule Q¹(2), où dans M¹Y¹ᵣ₁ (1) : M¹ = Sb, As, P, B ou Cl, Y¹ représente un halogène (de préférence F ou Cl) ou O et où r1 est un entier entre 4 et 6, la formule Q¹(2) représente un acide sulfonique R⁸¹-SO₃ où R⁸¹ est un groupe alkyle ou aryle, ou un groupe alkyle ou aryle substitué par un halogène, de préférence F ou Cl,
      R¹⁰¹ représente un groupe alkyle ou cycloalkyle, de préférence en C₁₀-C₂₀, ou un groupe aryle,
      R²¹ représente un hydrogène, un groupe alkyle, alcényle, cycloalcényle ou cycloalkyle, de préférence C₁-C_{20,} ou un groupe aryle, tous les R²¹ étant indépendants les uns des autres,
      R³¹ représente un hydrogène, un groupe alkyle, alcényle, cycloalcényle ou cycloalkyle, de préférence C₁-C₂₀, ou un groupe aryle, tous les R³¹ étant indépendants les uns des autres,
      R⁴¹ représente un hydrogène, un halogène, un groupe alcényle, par exemple vinyle, cycloalcényle, alkyle, ou cycloalkyle, de préférence en C₁-C₂₀, un groupe alcoxy ou thioalcoxy, de préférence en C₁-C₂₀, un groupe poly(alkylènoxyde) avec jusqu'à 10 unités alkylènoxydes terminé par un hydroxyle ou un alkyle (C₁-C₁₂), un groupe aryle, un groupe aryloxy ou thioaryloxy,
      R⁵¹ représente un halogène, un groupe alkyle, ou cycloalkyle, de préférence en C₁-C₂₀, un groupe alcoxy ou thioalcoxy, de préférence en C₁-C₂₀, un groupe poly(alkylènoxyde) avec jusqu'à 10 unités alkylènoxydes terminé par un hydroxyle ou un alkyle (C₁-C₁₂), un groupe aryle, un groupe aryloxy ou thioaryloxy,
      R⁶¹ représente un hydrogène, un groupe alkyle, alcényle, cycloalcényle ou cycloalkyle, de préférence en C₁-C₂₀, ou un groupe aryle,
      R⁷¹ représente un hydrogène, un groupe alkyle, alcényle, cycloalcényle ou cycloalkyle, de préférence en C₁-C₂₀, ou un groupe aryle,
   - 3) les sels de sulfonium dans lesquelles l'entité cationique comprend :
      → 3.1. au moins une espèce polysulfonium de formule III.1. 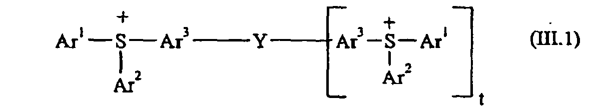
      dans laquelle :
      - les symboles Ar¹, qui peuvent être identiques ou différents entre-eux, représentent chacun un radical monovalent phényle ou naphtyle, éventuellement substitué avec un ou plusieurs radicaux choisis parmi : un radical alkyle linéaire ou ramifié en C₁ - C₁₂, de préférence en C₁-C₆, un radical alkoxy linéaire ou ramifié en C₁-C₁₂, de préférence en C₁-C₆, un atome d'halogène, un groupe -OH, un groupe - COOH, un groupe ester -COO-alkyle où la partie alkyle est un reste linéaire ou ramifié en C₁ - C₁₂, de préférence en C₁-C₆, et un groupement de formule -Y⁴-Ar² où les symboles Y⁴ et Ar² ont les significations données juste ci-après,
      - les symboles Ar², qui peuvent être identiques ou différents entre eux ou avec Ar¹, représentent chacun un radical monovalent phényle ou naphtyle, éventuellement substitué avec un ou plusieurs radicaux choisis parmi : un radical alkyle linéaire ou ramifié en C₁-C₁₂, de préférence en C₁-C₆, un radical alkoxy linéaire ou ramifié en C₁-C₁₂, de préférence en C₁-C₆, un atome d'halogène, un groupe -OH, un groupe -COOH, un groupe ester -COO-alkyle où la partie alkyle est un reste linéaire ou ramifié en C₁-C₁₂, de préférence en C₁-C₆,
      - les symboles Ar³, qui peuvent être identiques ou différents entre eux, représentent chacun un radical divalent phénylène ou naphtylène, éventuellement substitué avec un ou plusieurs radicaux choisis parmi : un radical alkyle linéaire ou ramifié en C₁-C₁₂, de préférence en C₁-C₆, un radical alkoxy linéaire ou ramifié en C₁-C₁₂, de préférence en C₁-C₆, un atome d'halogène, un groupe -OH, un groupe - COOH, un groupe ester -COO-alkyle où la partie alkyle est un reste linéaire ou ramifié en C₁-C₁₂,
         de préférence en C₁-C₆,
      - t est un nombre entiers égal à 0 ou 1,
         avec les conditions supplémentaires selon lesquelles :
         + quand t = 0, le symbole Y est alors un radical monovalent Y¹ représentant le groupement de formule : 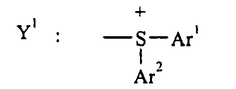 où les symboles Ar¹ et Ar² possèdent les significations données ci-avant,
         + quand t = 1 :
         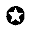 d'une part, le symbole Y est alors un radical divalent ayant les significations Y² à Y⁴ suivantes :
            - Y² : un groupement de formule : 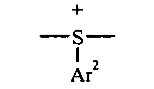 où le symbole Ar² possède les significations données ci-avant,
            - Y³ : un lien valentiel simple,
            - Y⁴ : un reste divalent choisi parmi : 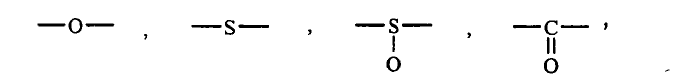 un reste alkylène linéaire ou ramifié en C₁-C₁₂, de préférence en C₁-C₆, et un reste de formule -Si(CH₃)₂O-,
         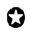 d'autre part, dans le cas uniquement où le symbole Y représente Y³ ou Y⁴, les radicaux Ar¹ et Ar² (terminaux) possèdent, outre les significations données ci-avant, la possibilité d'être reliés entre eux par le reste Y' consistant dans Y'¹ un lien valentiel simple ou dans Y'² un reste divalent choisi parmi les restes cités à propos de la définition de Y⁴, qui est installé entre les atomes de carbone, se faisant face, situés sur chaque cycle aromatique en position ortho par rapport à l'atome de carbone directement relié au cation S⁺ ;
            → 3.2. et/ou au moins une espèce monosulfonium possédant un seul centre cationique S⁺ par mole de cation et consistant dans la plupart des cas dans des espèces de formule : 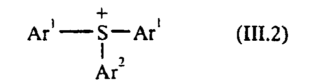
            dans laquelle Ar¹ et Ar² ont les significations données ci-avant à propos de la formule (III.1), incluant la possibilité de relier directement entre eux un seul des radicaux Ar¹ à Ar² selon la manière indiquée ci-avant à propos de la définition de la condition supplémentaire en vigueur quand t = 1 dans la formule (III.1), faisant appel au reste Y' ;
   - 4) les sels organométalliques de formule (IV):

      (L¹L²L³M)^{+q} (**IV**)

      formule dans laquelle :
      - M représente un métal du groupe 4 à 10, notamment du fer, manganèse, chrome, cobalt...
      - L¹ représente 1 ligand lié au métal M par des électrons π, ligand choisi parmi les ligands η³-alkyl, η⁵- cyclopendadiènyl et η⁷ - cycloheptratriènyl et les composés η⁶- aromatiques choisis parmi les ligands η⁶-benzène éventuellement substitués et les composés ayant de 2 à 4 cycles condensés, chaque cycle étant capable de contribuer à la couche de valence du métal M par 3 à 8 électrons π;
      - L² représente un ligand lié au métal M par des électrons π, ligand choisi parmi les ligands η⁷-cycloheptatriènyl et les composés η⁶-aromatiques choisis parmi les ligands η⁶- benzène éventuellement substitués et les composés ayant de 2 à 4 cycles condensés, chaque cycle étant capable de contribuer à la couche de valence du métal M par 6 ou 7 électrons π ;
      - L³ représente de 0 à 3 ligands identiques ou différents liés au métal M par des électrons σ, ligand(s) choisi(s) parmi CO et NO₂⁺; la charge électronique totale q du complexe à laquelle contribuent L¹, L² et L³ et la charge ionique du métal M étant positive et égale à 1 ou 2 ;

      *Δ l'entité anionique* ayant pour formule :

         [X¹X²ₐ R_{b}]⁻

         formule dans laquelle :
         - a et b sont des nombres entiers allant pour a de 0 à 6 et pour b de 0 à 6 avec a + b ≥ 2;
         - les symboles X¹ représentent des éléments choisis dans les colonnes IIIA, IVA, VA de la classification périodique, de préférence dans le groupe comprenant : B, P et Sb;
         - les symboles X² représentent :
            * un atome d'halogène (chlore, fluor) avec a = 0 à 3,
            * une fonction OH avec a = 0 à 2,
         - les symboles R sont identiques ou différents et représentent:
            ▷ un radical phényle substitué par au moins un groupement électroattracteur tel que par exemple OCF₃, CF₃, NO₂, CN, et/ou par au moins 2 atomes d'halogène (fluor tout particulièrement), et ce lorsque l'entité cationique est un onium d'un élément des groupes 15 à 17,
            ▷ un radical phényle substitué par au moins un élément ou un groupement électroattracteur notamment atome d'halogène (fluor tout particulièrement), CF₃, OCF₃, NO₂ CN, et ce lorsque l'entité cationique est un complexe organométallique d'un élément des groupes 4 à 10
            ▷ un radical aryle contenant au moins deux noyaux aromatiques tel que par exemple biphényle, naphtyle, éventuellement substitué par au moins un élément ou un groupement électroattracteur,
            notamment, un atome d'halogène (fluor tout particulièrement), OCF₃, CF₃, NO₂ CN, quelle que soit l'entité cationique ;
         cette composition étant caractérisée en ce qu'elle comporte en outre des molécules substituées par des groupements fonctionnels secondaires (GFS) portés par au moins un atome de silicium par molécule et sélectionnés, de préférence, parmi ceux comprenant au moins un motif alcoxy et/ou énoxy et/ou carboxy.

La composition de vernis silicone selon l'invention est avantageuse en ce qu'elle est aisément et industriellement réticulable par voie cationique et/ou radicalaire, par exposition à un faisceau d'électrons et/ou à un rayonnement actinique du type UV et/ou par activation thermique. Une fois appliqué et réticulé sur un support, ce vernis lui confère des caractéristiques anti-friction significatives.

Ces résultats intéressants résultent de la sélection judicieuse d'une composition de vernis silicone comprenant des composés dont les atomes de silicium (POS-silanes) sont porteurs de groupements fonctionnels de réticulation GFR ainsi que de groupements fonctionnels GFS, avantageusement de type alcoxy et/ou énoxy et/ou carboxy. Les GFS ont une part non négligeable dans l'apport de propriétés anti-friction à la composition de revêtement. Le fait que cette composition de vernis silicone soit facilement applicable et réticulable sur un support, par exemple, un tissu ou un film plastique, découle également de la mise en oeuvre d'une famille spécifique de photoamorceur du type de ceux décrits dans la demande de brevet français N° 96 16237 dont le contenu intégral est inclus par référence dans la présente demande. De tels photoamorceurs permettent une photoréticulation rapide et complète du vernis.

### EXPOSE DETAILLE DE L'INVENTION

Selon un premier mode de réalisation de l'invention, la composition de vernis silicone comprend :
- A - au moins un POS porteur de GFR, ces derniers étant, de préférence, choisis parmi les groupements comprenant au moins une fonction éthyléniquement insaturée - avantageusement acrylate et/ou alcényléther - et/ou époxyde et/ou oxéthane ;
- B - au moins un silane et/ou un POS porteur de GFS, ces derniers représentant de préférence au moins 0,5 % et plus préférentiellement encore au moins 1 % en poids de B ;
- C - au moins un système photoamorceur tel que défini supra.

Dans ce premier mode de réalisation les GFR, d'une part, et les GFS, d'autre part sont portés par des molécules ou macromolécules à base de silicium, différentes.

L'alternative qui correspond au second mode de réalisation de l'invention, est que ces molécules à base de silicium soient substituées à la fois par des groupements GFR et par des groupements GFS. Dans ce cas, la composition vernis silicone selon l'invention comprend :
- C - au moins un système photoamorceur tel que défini supra,
- D - au moins un POS porteur de GFR et de GFS,
les GFR étant de préférence choisis parmi les groupements comprenant au moins une fonction éthyléniquement insaturée - avantageusement acrylate et/ou alcényléther - et/ou époxyde et/ou oxéthane ;

Naturellement, il n'est pas à exclure que la composition selon l'invention comprenne les POS et/ou les silanes A, B, D, ensemble.

Ces compositions de vernis durcissantes (par exemple sous UV et/ou sous faisceau d'électrons) et apportant des propriétés anti-friction de surface, peuvent comprendre en outre :
- E - éventuellement au moins un diluant réactif organique choisi parmi les résines organiques de type époxyde et/ou vinyléther et/ou oxéthane ;
- F - éventuellement au moins un pigment organique ou inorganique ;
- G - éventuellement une charge, de préférence silicique ;
- H- éventuellement au moins un photosensibilisateur, de préférence sélectionné parmi les (poly)aromatiques (éventuellement métalliques) et/ou les hétérocycliques.

En entrant dans le détail sur la nature des différents constituants de la composition de vernis silicone selon l'invention, on précisera, s'agissant des POS A, que ce sont, de préférence, des époxysilicones et/ou des vinyléthersilicones qui sont :
→ soit linéaires ou sensiblement linéaires et constitués de motifs de formule (II.1), terminés par des motifs de formules (II.2),
→ soit cycliques et constitués par des motifs de formule (II.1) : 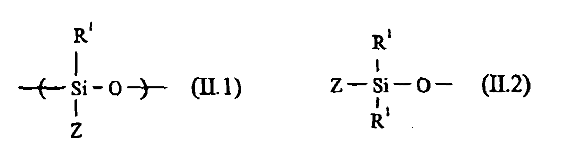 formules dans lesquelles :
   - les symboles R¹ sont semblables ou différents et représentent :
      - soit un radical alkyle linéaire ou ramifié en C₁-C₆, éventuellement substitué, avantageusement par un ou des halogènes, les radicaux alkyles éventuellement substitués préférés étant : méthyle, éthyle, propyle, octyle et 3,3,3 trifluoropropyle,
      - soit un radical cycloalkyle en C₅-C₈, éventuellement substitué,
      - soit un radical aryle ou aralkyle, éventuellement substitué :

      - notamment par des halogènes et/ou des alcoxyles,
      - les radicaux phényle, xylyle, tolyle et dichlorophényle étant tout particulièrement sélectionnés,
   - les symboles Z sont semblables ou différents et représentent :
      - soit le radical R¹,
      - soit un groupement GFR correspondant à un reste époxyde ou vinyléther relié au silicium par l'intermédiaire d'un radical divalent contenant, avantageusement, de 2 à 20 atomes de carbone comportant, éventuellement, un hétéroatome,
      l'un au moins des symboles Z correspondant à un groupement GFR.

Comme exemples de groupements organofonctionnels GFR du type époxy, on peut citer ceux de formule suivante :

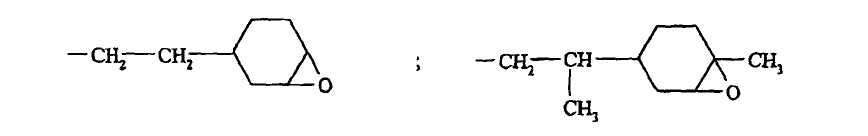

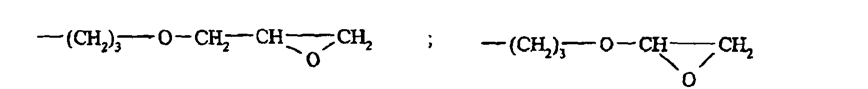

S'agissant des groupements organofonctionnels GFR du type vinyléther, on peut mentionner, e. g., ceux contenus dans les formules suivantes : 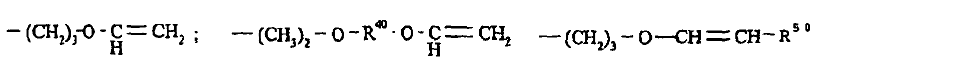
□ avec R⁴⁰ =
   - alkylène linéaire ou ramifié en C₁-C₁₂, éventuellement substitué,
   - ou arylène, de préférence phénylène, éventuellement substitué, de préférence par un à trois groupements alkyles en C₁-C₆ ;
□ avec R⁵⁰ = alkyle linéaire ou ramifié en C₁-C₆.

Les polyorganosiloxanes époxy ou vinyloxyfonctionnels préférés sont décrits notamment dans les brevets DE-A-4 009 889 ; EP-A-0 396 130 ; EP-A-0 355 381 ; EP-A-0 105 341 ; FR-A-2 110 115 ; FR-A-2 526 800.

Les polyorganosiloxanes époxy fonctionnels peuvent être préparés par réaction d'hydrosilylation entre des huiles à motifs Si-H et des composés époxyfonctionnels, tels que vinyl-4 cyclohexèneoxyde, allylglycidyléther.

Les polyorganosiloxanes vinyloxyfonctionnels peuvent être préparés par réaction d'hydrosilylation entre des huiles à motifs Si-H et des composés vinyloxyfonctionnels, tels que l'allylvinyléther, l'allyl-vinyloxyéthoxybenzène...

Plus préférentiellement encore, les POS A sont des époxysilicones de formules **(A.I) (A.II) (A.III)** suivantes : 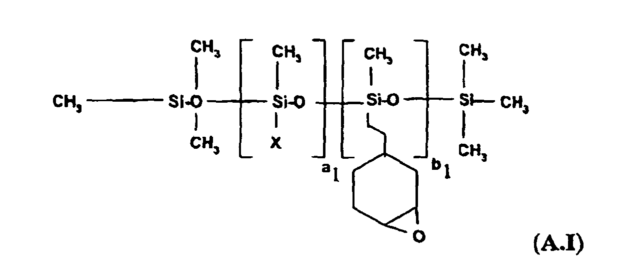 avec X = CH₃ ; Phényle ; Cycloalkyle ; alkyle C₁-C₁₈; alcényle ;
- OH; H ; CH₂-CH₂-CH₂-OH ; CH₂-CH₂-CF₃ ; -(CH₂)ₙ-CF₃, n = 1 à 20 ; 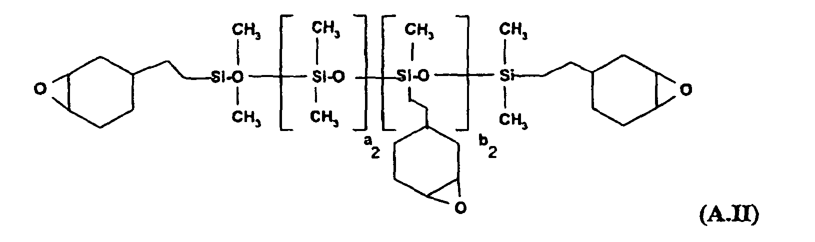
- a₁, a₂ et b₁, b₂ étant définis comme suit dans ces formules **(A.I)** et **(A.II)**

| | | |
|---|---|---|
| | 1 ≤ a₁, a₂ | 1 ≤ b₁, b₂ |
| de préférence | 1 ≤ a₁, a₂ ≤ 5 000 | 1 ≤ b₁, b₂ ≤ 500 |
| et plus préférentiellement encore | 1 ≤ a₁, a₂ ≤ 1 000 | 1 ≤ b₁, b₂ ≤ 100 ; |

- a₂, b₂ étant = 0 dans la formule **(A.II)** pour donner le disiloxane époxydé

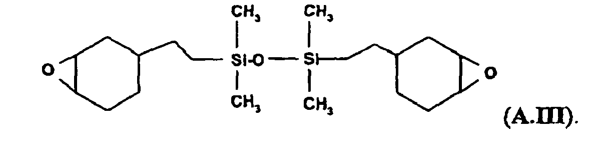

Selon une autre caractéristique avantageuse de l'invention, le ou les POS (A) a (ont) une viscosité η (exprimée en mPa.s à 25° C) comprise entre :
→ 200 et 3000,
   → de préférence 300 et 2000,
   → et plus préférentiellement encore entre 400 et 900.
   Ces valeurs de viscosité concernent aussi bien les POS linéaires que les POS cycliques susceptibles d'être mis en oeuvre conformément à l'utilisation selon l'invention.

La viscosité dynamique à 25° C, de tous les polymères silicones considérés dans le présent exposé, peut être mesurée à l'aide d'un viscosimètre BROOKFIELD, selon la norme AFNOR NFT 76 102 de février 1972.

La viscosité dont il est question dans le présent exposé est la viscosité dynamique à 25° C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Conformément à l'invention, il est parfaitement envisageable de mettre en oeuvre un mélange de différents POS A à motifs de formule (**I**) et (**II**), tels que définis ci-dessus (linéaires et/ou cycliques).

Concernant le (ou les) composé(s) B, il est avantageux conformément à l'invention qu'il(s) soi(en)t choisi(s) parmi celui (ou ceux) de formule B suivante :

(**B**) R²ₓ[GFS]_{y}SiO_{4-(x+y)/2}

dans laquelle :
- x=0, 1, 2 ou 3
- y=1, 2, 3 ou 4
- les radicaux R² sont identiques ou différents entre eux et correspondent à un alkyle linéaire ou ramifié, un cycloalkyle, un hydroxyle, un hydrogène, un vinyle, un -CF₃, un -(CH₂)ₘ-CF₃ avec m = 1 à 50,
- les GFS sont identiques ou différents entre eux et correspondent à °un alcoxy, de préférence : -OR³ avec R³ représentant un alkyle linéaire ou ramifié en C₁-C₃₀ ou un cycloalkyle ;
   -(OR⁴)ₚ-OR⁵ ; -(R⁶)_{q}-Si(OR⁷)ᵣ -(R⁸)ₗ
   avec R⁴, R⁷, R identiques ou différents entre eux et répondant à la même définition que celle donnée ci-dessus pour R³ et avec R⁶ identiques ou différents entre eux et correspondant de préférence à un alkylène (avantageusement un méthylène) ;
   p, q = 1 à 50, de préférence 1 à 10;
   r = 1, 2 ou 3 et t = 0,1 ou 2 ;
   ° un énoxy, de préférence :
   -O-CH = CH-R⁸;
   -(R⁹)ᵤ-Si(OCH = CHR¹⁰)ᵥ(R¹¹)_{w};
   avec R⁸, R¹⁰, R¹¹ identiques ou différents entre eux et répondant à la même définition que celle donnée ci-dessus pour R³, et avec R⁹ répondant à la même définition que celle donnée ci-dessus pour R⁶;
   u = 1 à 50 de préférence 1 à 10,
   v = 1, 2 ou 3 et w=0, 1 ou 2 ;
   ° un carboxy, de préférence :
   -OCOR¹² ;
   -(R¹³)_{z}-Si(OCOR¹⁴)_{z1}(R¹⁵)_{z2} ;
   avec R¹², R¹⁴ tels que définis ci-dessus pour R⁸, R¹⁰, R¹¹ ;
   R¹³ tels que définis ci-dessus pour R⁹ ;
   et
   z = 1 à 50 de préférence 1 à 10,
   z₁ = 1, 2 ou 3 et z₂ = 0, 1 ou 2 ;
A titre d'exemple de POS B, on peut citer : 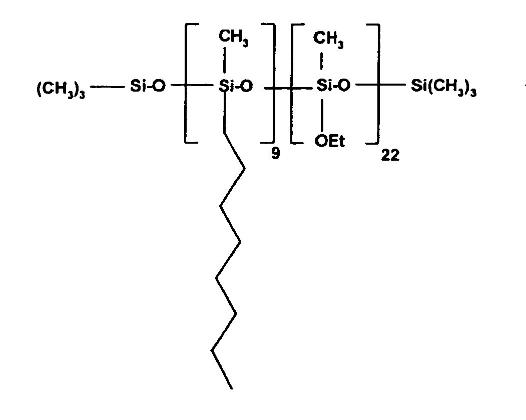 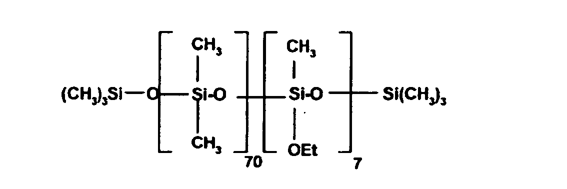 avec Et = éthyle.
A titre d'exemple de silane B, on peut citer :
MeSi(OEt)₃ ; Si(OEt)₄ ; PrSi(OEt)₃ ; OctSi(OMe)₃ ; PrSi(OMe)₃ ; ... avec Me = méthyle ; Et = éthyle ; Pr = propyle, Oct = octyle.

Conformément au deuxième mode de réalisation, on met en oeuvre des POS D mixtes comprenant à la fois des GFR et GFS. Sans que cela ne soit limitatif, il s'avère que l'on privilégie plus spécialement ce deuxième mode de réalisation. Ainsi, les POS D mis en oeuvre comprennent avantageusement des GFS tels que définis supra et des GFR de type époxyde.

Plus préférentiellement encore, ledit POS D correspond aux POS de formules (**D', D", D**"') suivantes : 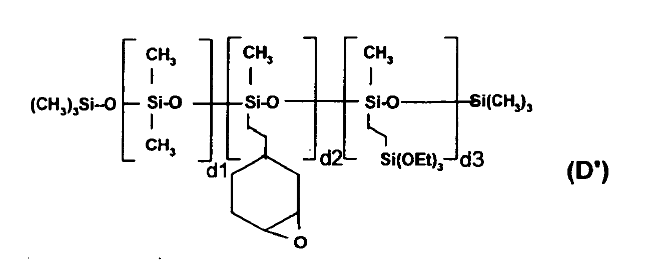 avec

| | | | |
|---|---|---|---|
| | 0≤d₁ | 1 ≤d₂ | 1 ≤d₃ |
| de préférence | 0≤ d₁ ≤ 5000 | 1≤ d₂ ≤ 500 | 1 ≤ d₃ ≤ 500 |
| et plus préférentiellement encore | 0 ≤ d₁ ≤ 1000 | 1≤ d₂ ≤ 100 | 1 ≤ d₃ ≤ 100 |

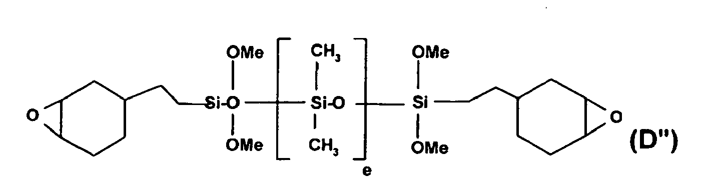

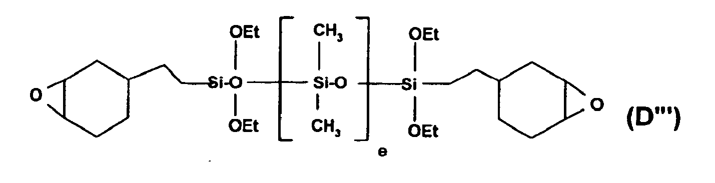

avec Me= méthyle ; Et = éthyle

| | |
|---|---|
| | 0 ≤ e |
| de préférence | 0 ≤ e ≤ 5000 |
| et plus préférentiellement encore | 0 ≤ e ≤ 1000 |

Dans le cas où le composé D est un silane comprenant à la fois des GFR de type (Meth)acrylate et/ou vinyléther et/ou époxyde et/ou oxéthane - de préférence époxyde - ainsi que des GFS - de préférence de type alcoxy -, il peut s'agir par exemple des composés suivants :

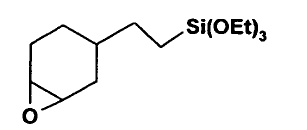

Suivant une caractéristique préférée de l'invention, les amorceurs C sont e.g. : les borates d'onium décrits dans la demande de brevet européen N° 0 562 922, dont le contenu intégral est inclus par référence dans la présente demande. Plus précisément encore, on peut mettre en oeuvre en pratique l'amorceur de formule suivante :

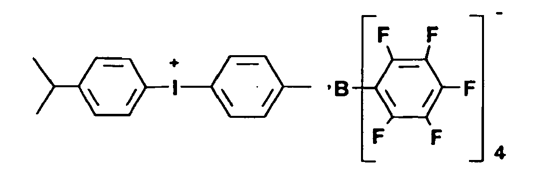

En pratique, les amorceurs de l'utilisation suivant l'invention sont préparés de manière très simple par dissolution du borate d'onium ou de complexe organométallique, de préférence d'onium, se présentant sous forme solide (poudre) dans un solvant.

Selon une alternative concernant le borate d'onium, ce dernier peut être préparé directement dans le solvant, à partir d'un sel (e.g. chlorure) du cation (iodonium) et d'un sel (par exemple de potassium) de l'anion borate.

De préférence, il est prévu conformément à l'utilisation selon l'invention que l'amorceur (PA) est employé en solution dans un solvant organique, de préférence choisi parmi les solvants donneurs de protons et plus préférentiellement encore parmi le groupe suivant : alcool isopropylique, alcool benzylique, diacétone-alcool, lactate de butyle, esters, et leurs mélanges. Comme cela est revendiqué dans le brevet français N° 2 724 660, les solvants organiques donneurs de protons et à caractère aormatique (alcool benzylique), se comportent comme des accélérateurs de réticulation. Il est donc avantageux de s'en servir pour mettre en solution, le photoamorceur.

Il convient de préciser que par quantité catalytique efficace de PA, on entend, au sens de l'invention, la quantité suffisante pour amorcer la réticulation.

Dans la mesure où en pratique, - comme indiqué supra -, le photoamorceur ou photoinitiateur est avantageusement dissous dans un solvant polaire, en quantité telle que son titre à la solution obtenue soit compris entre 1 et 50 % en poids, de préférence entre 10 et 30 % en poids, et plus préférentiellement encore entre 15 et 25 % en poids.
Selon une modalité avantageuse de l'utilisation selon l'invention, l'incorporation du PA en solution dans la composition comprenant le POS à teneur molaire en GRF donnée, se fait à raison de 0,1 à 10 % en poids de solution par rapport au mélange final, de préférence 0,5 à 5 % en poids et plus préférentiellement de l'ordre de 1 % en poids.

Selon une variante de l'utilisation conforme à l'invention, on peut mettre en oeuvre des inhibiteurs de réticulation, de préférence choisis parmi les produits alcalins, et plus préférentiellement encore parmi les produits alcalins de type aminé, par exemple du type de ceux consistant en un silicone sur lequel est greffé au moins un groupement amine, de préférence tertiaire.

S'agissant des additifs facultatifs, on peut indiquer à propos de l'éventuel diluant réactif E, que les composés de formule E' (époxyde) et E" (vinyléther) sont des exemples parmi d'autres :

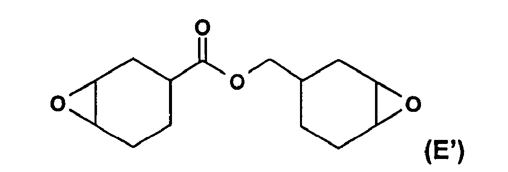

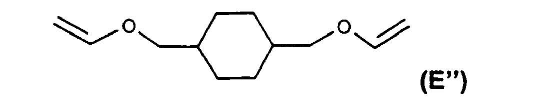

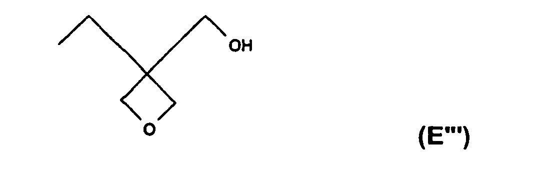

Les éventuels pigments inorganiques ou organiques F sont ajoutés pour donner une teinte au vernis silicone selon l'invention. En particulier, cette teinte permet de reconnaître un tissu non vernis d'un tissu vernis par simple coût d'oeil.

A titre d'exemples de pigments, on peut citer le noir de carbone ; le dioxyde de titane ;la phtalocyanine ; la benzimidazolone ;les naphtols (BONA pigment lakes) ; les diazopyrazolones : les pigments jaunes diarylides ou monoarylides ...

Les charges G et en particulier les charges siliciques peuvent être par exemple des silices de combustion traitées à l'hexaméthyldisilasanes ou à l'octaméthylcyclotétrasiloxanes (surface spécifique 300 m²/g), silice fumée. Ces charges peuvent être minérales ou non, e.g. : fibre synthétique ou naturelle (polymères) broyés, carbonate de calcium, talc, argile, dioxyde de titane...

Concernant les éventuels photosensibilisateurs H, ils peuvent être sélectionnés parmi les produits (poly)aromatiques -éventuellement métalliques- et les produits hétérocycliques, et de préférence dans la liste de produits suivants : phénothiazine, tétracène, pérylène, anthracène, diphényl-9,10-anthracène, thioxanthone, benzophénone, acétophénone, xanthone, fluorénone, anthraquinone, 9,10-diméthylanthracène, 2-éthyl-9,10-diméthyloxyanthracène, 2,6-diméthylnaphtalène, 2,5-diphényl-1-3-4-oxadiazole, xanthopinacol, 1,2-benzanthracène, 9-nitro-anthracène, et leurs mélanges.
Plus spécialement, il peut s'agir d'un produit H à base de thioxanthone :

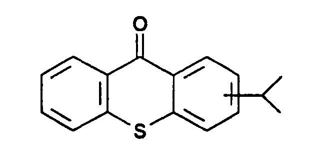

Compte tenu de sa facilité d'obtention de son faible coût et de ses propriétés anti-friction, le vernis silicone selon l'invention est susceptible d'avoir des débouchés dans de nombreux domaines d'application et en particulier dans le domaine de l'enduction des supports fibreux tissés ou non.
D'où il s'ensuit que l'invention concerne selon un autre de ses aspects, l'application de la composition telle que décrite ci-dessus à titre de vernis anti-friction sur un support, ce support comportant de préférence, un substrat - avantageusement fibreux (et plus spécialement textile) - éventuellement revêtu d'au moins une couche d'élastomère silicone au moins partiellement réticulée.
Avantageusement, ce procédé d'application consiste essentiellement :
- à enduire un support à l'aide de la composition de vernis tel que défini ci-dessus,
- et à exposer la surface ainsi enduite à des rayonnements actiniques et/ou à un faisceau d'électrons et/ou à la chaleur, de manière à faire réticuler la couche de vernis.
Les moyens d'application de la couche de vernis non réticulé sur le support sont du type de ceux connus et appropriés à cette fin (barre ou cylindre d'enduction). Il en va de même en ce qui concerne les moyens d'exposition, par exemple, aux rayonnements UV et/ou aux faisceaux d'électrons.
D'autres détails seront donnés à cet égard dans les exemples qui suivent.
La présente invention concerne également le support vernis doté de propriétés anti-frictions, telles qu'obtenues par l'application sus-définie.
Selon un mode de réalisation préféré de ce support vernis, celui-ci comprend un substrat - de préférence textile - revêtu sur au moins une de ses faces d'au moins une couche d'élastomère silicone réticulable ou au moins partiellement réticulé de préférence choisi parmi :
- les silicones RTV polyaddition ou polycondensation,
- et/ou les silicones EVC au peroxyde,
- et/ou les silicones LSR polyaddition,
le vernis anti-friction obtenu à partir de la composition, telle que définie supra, étant appliqué sur la (ou les) couche(s) (supérieure(s)) d'élastomère silicone. Les expressions RTV, LSR, EVC sont bien connues de l'homme du métier : RTV est l'abréviation de "room temperature vulcanising" ; LSR est l'abréviation de "Liquid silicon rubber" ; EVC est l'abréviation de : "Elastomère vulcanisable à chaud".

En pratique, l'invention vise plus précisément les supports (par exemple textiles tels que ceux utilisés pour la fabrication "d'airbags") revêtus sur l'une et/ou l'autre de leurs faces d'une couche d'élastomère silicone réticulé RTV, EVC ou LSR, elle-même enduite d'un revêtement de vernis silicone anti-friction tel que défini ci-dessus.
Le problème de l'apport de propriétés anti-friction est particulièrement aigu s'agissant de ces enductions élastomères silicones réticulées, puisque comme cela a déjà été indiqué ci-dessus, ces dernières ont pour caractéristique d'avoir un toucher collant.

Les polyorganosiloxanes, constituants principaux des couches collantes d'élastomères réticulés sur lesquelles le vernis selon l'invention peut être appliqué, peuvent être linéaires, ramifiés ou réticulés, et comporter des radicaux hydrocarbonés et/ou des groupements réactifs comme par exemple des groupes hydroxyles, des groupements hydrolysables, des groupements alkényles et des atomes d'hydrogène. A noter que les compositions polyorganosiloxanes sont amplement décrites dans la littérature et notamment dans l'ouvrage de Walter NOLL: "Chemistry and Technology of Silicones", Academic Press, 1968, 2ème édition, pages 386 à 409.

Plus précisément, ces polyorganosiloxanes vernissables sont constitués de motifs siloxyles de formule générale : 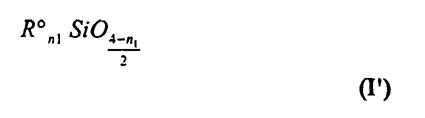 et/ou de motifs siloxyles de formule : 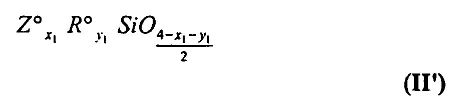 formules dans lesquelles les divers symboles ont la signification suivante :
- les symboles R°, identiques ou différents, représentent chacun un groupement de nature hydrocarbonée non hydrolysable, ce radical pouvant être :
   * un radical alkyle, halogénoalkyle ayant de 1 à 5 atomes de carbone et comportant de 1 à 6 atomes de chlore et/ou de fluor,
   * des radicaux cycloalkyles et halogénocycloalkyles ayant de 3 à 8 atomes de carbone et contenant de 1 à 4 atomes de chlore et/ou de fluor,
   * des radicaux aryles, alkylaryles et halogénoaryles ayant de 6 à 8 atomes de carbone et contenant de 1 à 4 atomes de chlore et/ou de fluor,
   * des radicaux cyanoalkyles ayant de 3 à 4 atomes de carbone ;
- les symboles Z°, identiques ou différents, représentent chacun un atome d'hydrogène, un groupement alkényle en C₂-C₆, un groupement hydroxyle, un atome hydrolysable, un groupement hydrolysable ;
- n₁ = un nombre entier égal à 0, 1, 2 ou 3 ;
- x₁ = un nombre entier égal à 0, 1, 2 ou 3 ;
- y₁ = un nombre entier égal à 0, 1, ou 2 ;
- la somme x + y est comprise entre 1 et 3.

A titre illustratif, on peut citer parmi les radicaux organiques R° directement liés aux atomes de silicium : les groupes méthyle ; éthyle ; propyle ; isopropyle ; butyle ; isobutyle ; n-pentyle ; t-butyle ; chlorométhyle ; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle; trifluoro-4,4,4 butyle ; hexafluoro-3,3,4,4,5,5 pentyle ; β-cyanoéthyle ; γ-cyanopropyle ; phényle : p-chlorophényle ; m-chlorophényle ; dichloro-3,5 phényle; trichlorophényle ; tétrachlorophényle ; o-, p- ou m-tolyle ; α,α,α-trifluorotolyle ; xylyle comme diméthyl-2,3 phényle, diméthyl-3,4 phényle.

Préférentiellement, les radicaux organiques R° liés aux atomes de silicium sont des radicaux méthyle, phényle, ces radicaux pouvant être éventuellement halogénés ou bien encore des radicaux cyanoalkyle.

Les symboles Z° peuvent être des atomes d'hydrogène, des atomes hydrolysables tels que des atomes d'halogène, en particulier des atomes de chlore, des groupements vinyles, hydroxyles ou des groupements hydrolysables tels que par exemple : amino, amido, aminoxy, oxime, alkoxy, alkényloxy, acyloxy.

La nature du polyorganosiloxane et donc les rapports entre les motifs siloxyles (I') et (II") et la répartition de ceux-ci est, comme on le sait, choisie en fonction du traitement de réticulation qui sera effectué sur la composition durcissable (ou vulcanisable) en vue de sa transformation en élastomère.

Il est possible d'utiliser une grande variété de compositions monocomposantes ou bicomposantes réticulant par des réactions de polyaddition ou de polycondensation, en présence d'un catalyseur métallique et éventuellement d'une amine et d'un agent de réticulation.

Les compositions polyorganosiloxanes bicomposantes ou monocomposantes réticulant à température ambiante (RTV) ou à la chaleur (EVC) par des réactions de polyaddition, essentiellement par réaction de groupements hydrogénosilylés sur des groupements alkénylsilylés, en présence généralement d'un catalyseur métallique, de préférence au platine, sont décrites par exemple dans les brevets US-A-3 220 972, 3 284 406, 3 436 366, 3 697 473 et 4 340 709. Les polyorganosiloxanes entrant dans ces compositions sont en général constitués par des couples à base d'une part d'un polysiloxane linéaire, ramifié ou réticulé constitué de motifs (II) dans lesquels le reste Z° représente un groupement alkényle en C₂ - C₆ et où x₁ est au moins égal à 1, éventuellement associés à des motifs (I'), et d'autre part d'un hydrogénopolysiloxane linéaire, ramifié ou réticulé constitué de motifs (II') dans lesquels le reste Z° représente alors un atome d'hydrogène et où x₁ est au moins égal à 1, éventuellement associés à des motifs (I').

Les compositions polyorganosiloxanes bicomposantes ou monocomposantes réticulant à température ambiante (RTV) par des réactions de polycondensation sous l'action de l'humidité, en présence généralement d'un catalyseur métallique, par exemple un composé de l'étain sont décrites par exemple pour les compositions monocomposantes dans les brevets US-A-3 065 194, 3 542 901, 3 779 986, 4 417 042, et dans le brevet FR-A-2 638 752, et pour les compositions bicomposantes dans les brevets US-A-3 678 002, 3 888 815, 3 933 729 et 4 064 096. Les polyorganosiloxanes entrant dans ces compositions sont en général des polysiloxanes linéaires, ramifiés ou réticulés constitués de motifs (II') dans lesquels le reste Z° est un groupement hydroxyle ou un atome ou groupement hydrolysable et où X₁ est au moins égal à 1, avec la possibilité d'avoir au moins un reste Z° qui est égal à un groupement hydroxyle ou à un atome ou à un groupement hydrolysable et au moins un reste Z° qui est égal à un groupement alkényle quand x₁ est égal à 2 ou 3, lesdits motifs (II') étant éventuellement associés à des motifs (I'). De pareilles compositions peuvent contenir en outre un agent de réticulation qui est notamment un silane portant au moins trois groupements hydrolysables comme par exemple un silicate, un alkyltrialkoxysilane ou un aminoalkyltrialkoxysilane.

Ces compositions polyorganosiloxanes RTV qui réticulent par des réactions de polyaddition ou de polycondensation, présentent avantageusement une viscosité à 25°C au plus égale à 100 000 mPa.s et, de préférence, comprise entre 10 et 50 000 mPa.s.

Il est possible de mettre en oeuvre des compositions RTV réticulant à température ambiante par des réactions de polyaddition ou de polycondensation, ayant une viscosité à 25°C supérieure à 100 000 mPa.s, comme celle se situant dans l'intervalle allant d'une valeur supérieure à 100 000 mPa.s à 300 000 mPa.s ; cette modalité est recommandée lorsque l'on souhaite préparer des compositions durcissables chargées dans lesquelles la (ou les) charge(s) utilisée(s) a (ont) tendance à se séparer par sédimentation.

Il est également possible de mettre en oeuvre, des compositions réticulant à la chaleur par des réactions de polyaddition et plus précisément de compositions dites de type EVC de polyaddition, ayant une viscosité à 25°C au moins égale à 500 000 mPa.s et, de préférence comprise entre 1 million de mPa.s et 10 millions de mPa.s et même davantage.

Il peut aussi s'agir de compositions durcissables à température élevée sous l'action de peroxydes organiques tels que le peroxyde de dichloro-2,4 benzoyle, le peroxyde de benzoyle, le perbenzoate de t-butyle, le peroxyde de cumyle, le peroxyde de di-t-butyle. Le polyorganosiloxane ou gomme entrant dans de telles compositions (dénommées simplement de type EVC) est alors constitué essentiellement de motifs siloxyles (I'), éventuellement associés à des motifs (II') dans lesquels le reste Z° représente un groupement alkényle en C₂ - C₆ et où x est égal à 1. De tels EVC sont par exemple décrits dans les brevets US-A-3 142 655, 3 821 140, 3 836 489 et 3 839 266). Ces compositions présentent avantageusement une viscosité à 25°C au moins égale à 1 million de mPa.s et, de préférence, comprise entre 2 millions et 10 millions de mPa.s et même davantage.

D'autres compositions polyorganosiloxanes vernissables par la composition de vernis silicone selon l'invention sont celles, monocomposantes ou bicomposantes, réticulant à la chaleur par des réactions de polyaddition, appelées compositions LSR. Ces compositions répondent aux définitions données ci-avant à propos des compositions préférées appelées RTV, sauf en ce qui concerne leur viscosité qui se situe cette fois dans l'intervalle allant d'une valeur supérieure à 100 000 mPa.s à 500 000 mPa.s.

Sans que cela ne soit limitatif, les revêtements silicones élastomères sur lesquels le vernis selon l'invention peut être appliqué pour diminuer leur coefficient de friction, sont plus spécialement des revêtements obtenus à partir de compositions élastomères silicones vulcanisables à froid RTV, en particulier de type bicomposant (RTV 2), par polyaddition.

De manière plus préférée encore, ces couches élastomères silicones d'enduction sont mises en oeuvre dans le revêtement de toile textile pour coussin gonflable de protection individuelle d'occupant de véhicule ("airbag").

Il en résulte qu'un autre objet de l'invention est constitué par le support vernis tel que défini ci-dessus caractérisé en ce qu'il est destiné à être utilisé pour la fabrication de coussins gonflables de protection individuelle d'occupants de véhicule.

Selon un autre de ces objets, la présente invention vise également un coussin gonflable de protection individuelle d'occupant de véhicule caractérisé en ce qu'il est réalisé à partir du susdit support.

Dans le cadre de cette application "airbag", les revêtements silicones élastomères RTV plus particulièrement concernés, peuvent être ceux appartenant aux quatre groupes (i) (ii) (iii) (iv) tels que définis ci-après.
(i) composition élastomère silicone d'enduction de type RTV 2 comprenant au moins un POS I de type SiVi, au moins un POS II de type SiH, un catalyseur d'hydrosilylation au platine III, un promoteur d'adhérence IV comprenant au moins un organosilane alcoxylé IV.1 contenant par molécule au moins un groupe vinyle (vinyltriméthoxysilane), au moins un composé IV.2 organosilicié comprenant au moins un radical époxy (3-glycidoxypropyl triméthoxysilane (GLYMO) et au moins un chélate IV.3 de métal M et/ou un alcoxyde métallique (titanate de butyle).
   Ces enductions silicones RTV de polyaddition pour airbag sont décrites dans le brevet français N° 2 719 598 (N° 94 05 652).
(ii) Elastomère silicone RTV 2 polyaddition obtenu à partir d'une composition comprenant des POS de type I SiVi et des POS de type II SiH, ainsi qu'une charge particulaire obtenue par traitement à l'aide d'un agent de compatibilisation introduit dans le milieu de préparation: d'une part, avant et/ou sensiblement simultanément à la mise en présence d'une partie de l'huile silicone mise en oeuvre avec une partie de la charge particulaire, cette introduction d'agent de compatibilisation s'opérant en une ou plusieurs fois pour une fraction d'agent de compatibilisation représente au plus 8 % en poids sec de la charge totale particulaire ;
   et, d'autre part, après cette mise en présence POS / charge. L'agent de compatibilisation est l'hexaméthyldisilasane HMDZ. L'huile SiVi est une polydiméthylsiloxane α,ω-divinylé et l'huile II SiH est une polydiméthylsiloxane α,ω-dihydrogéno et une huile PDMS polyhydrogéno. Cette composition élastomère (ii) RTV réticulable par polyaddition et comprenant une charge particulaire compatibilisée de manière particulière à l'HMDZ, est décrite en détail dans la demande de brevet français N° 97 08 171.
(iii) Revêtement élastomère silicone RTV réticulé par polycondensation et comprenant une charge particulaire silicique traitée à l'aide d'un agent de compatibilisation introduit dans le milieu de préparation, d'une part, avant et/ou sensiblement simultanément à la mise en présence d'une partie de l'huile silicone mise en oeuvre avec une partie de la charge particulaire, cette introduction d'agent de compatibilisation s'opérant en une ou plusieurs fois pour une fraction d'agent de compatibilisation représente au plus 8 % en poids sec de la charge totale particulaire ;
   et, d'autre part, après cette mise en présence POS / charge. L'agent de compatibilisation est l'hexaméthyldisilasane HMDZ.
   Ces revêtements silicones RTV polycondensation dont la charge est traitée de manière spécifique à l'HMDZ, qui sont destinés notamment à l'enduction de toile textile pour airbag, sont décrits dans la demande de brevet français N° 98 16 467 décrivant des compositions comprenant :
   1- au moins un POS réactif linéaire portant à chaque extrémité de chaîne au moins deux groupes condensables (autres que OH) ou hydrolysable, ou un seul groupe hydroxy,
   2- éventuellement au moins un POS non réactif linéaire ne portant pas de groupe condensable, hydrolysable ou hydroxy,
   3- éventuellement de l'eau,
   4- une charge renforçante particulaire à base de silice traitée à l'aide de compatibilisation (hexaméthyldisilazane), cet agent de compatibilisation étant introduit dans la composition avant et après l'incorporation de la charge renforçante dans au moins une partie de la matière silicone, la fraction d'agent de compatibilisation introduite avant l'incorporation de la charge représentant de 8 à 30 % en poids de la charge renforçante utilisée.
   (POS 1 = polydiméthylsiloxaneα,ω-(CH₃)₃SiO_{1/2} ;
   POS 2 = polydiméthylsiloxaneα,ω-(CH₃)₂OHSiO_{1/2}) ;
(iv) revêtement élastomère silicone RTV réticulé par polyaddition et obtenu à partir d'une composition d'enduction comprenant :
   (1) au moins un polyorganosiloxane présentant, par molécule, au moins deux groupes alcényles, en C₂-C₆ liés au silicium (e.g. PolyDiméthylSiloxane(PDMS-α,ω vinylée) ;
   (2) au moins un polyorganosiloxane présentant, par molécule, au moins deux atomes d'hydrogène liés au silicium (e.g. PDMS α,ω dihydrogéno et PDMS polyhydrogéno),
   (3) une quantité catalytiquement efficace d'au moins un catalyseur, composé d'au moins un métal appartenant au groupe du platine (e.g. : KARSTEDT 10 % Pt)
   (4) un promoteur d'adhérence ternaire consistant en :
      (4.1.) au moins un organosilane alcoxylé contenant, par molécule, au moins un groupe alcényle en C₃-C₆, (e.g. : triméthoxysilane γ méthacryloxypropylé)
      (4.2.) au moins un composé organosilicié comprenant au moins un radical époxy, (e.g. : triméthoxysilane de γ glycidoxypropyle)
      (4.3.) au moins un chélate de métal M et/ou un alcoxyde métallique de formule générale : M(OJ)n, avec n = valence de M et J = alkyle linéaire ou ramifié en C₁-C₈,
         M étant choisi dans le groupe formé par : Ti, Zr, Ge, Li, Mn, Fe, Al et Mg (e.g. : titanate de butyle).
   (5) une charge siliceuse renforçante traitée in situ par un agent de compatibilisation (e.g. : HMDZ) en présence de polyorganosiloxane (1),
   (6) un polyorganosiloxane qualifié d'allongeur et présentant des motifs siloxyles terminaux à fonctions hydrogéno, (e.g. PDMS α,ω hydrogéno - RHODORSIL^{®} 620 de RHODIA CHIMIE)
   (7) éventuellement un neutralisant,
   (8) éventuellement un inhibiteur de réticulation et/ou autre(s) additif(s) en usage dans ce type de compositions (e.g. : éthynylcyclohexanol).
   (9) et éventuellement des charges microsphériques creuses inorganiques expansées ou expansables,
      procédé dans lequel on prépare une suspension de charge siliceuse renforçante en mettant en présence cette charge siliceuse avec de l'agent de compatibilisation et du polyorganosiloxane (1), ce qui constitue le traitement in situ de la charge.

Toutes ces compositions silicones élastomères RTV réticulables et/ou réticulées sont préparées de manière classique (système précurseur bicomposant) et sont décrites par exemple dans le brevet français N° 2 719 598, pour ce qui concerne les RTV(iv).

Une fois l'empatage bi-composant réalisé, il est appliqué sur le support par tout moyen d'enduction approprié, par exemple racle ou cylindre. La réticulation de la couche enduite sur le support peut être provoquée, par exemple, par voie thermique et/ou par rayonnement UV.
Le support ainsi revêtu peut être un matériau souple tel que, par exemple, un support fibreux avantageusement tissé en fibres synthétiques e.g. polyester ou polyamide. De tels tissus enduits peuvent être utilisés pour la fabrication par couture de coussin gonflable pour automobile (airbag).
Une fois le support revêtu de la couche élastomère RTV réticulée, on procède conformément à l'invention à l'application du vernis silicone anti-friction puis à la réticulation dudit vernis par exposition à des rayonnements actiniques ou à des faisceaux d'électrons.
Outre les supports textiles revêtus de silicone, le vernis anti-friction selon l'invention peut être appliqué :
➢ sur des films plastiques (e.g. en polyester) que sont les rubans de transfert thermique pour les imprimantes de même nom,
➢ ou sur des films plastiques d'emballage de protection (e.g. en polyéthylène ou en polypropylène).
Dans ces deux applications, le vernis antifriction selon l'invention va promouvoir le glissement d'au moins l'une des faces du film plastique, cette face pouvant être revêtue d'au moins une couche silicone.

Les exemples qui suivent décrivent:
➢ la préparation des compositions de vernis anti-friction selon l'invention,
➢ l'application de ces dernières :
   - sur des supports en tissu revêtus d'un élastomère silicone réticulé RTV polyaddition,
   - sur des rubans de transfert thermique comprenant un film polyester de quelques microns,
   - et sur des films d'emballage en polyéthylène.
➢ et l'évaluation des échantillons ainsi obtenus en terme de coefficient de friction,

### EXEMPLES :

Dans les exemples qui suivent, on décrit l'obtention de formulations directement exploitables pour la réalisation de vernis UV pour "Air-bags".

### Exemples 1 à 14

On réalise des formulations de vernis photoréticulables à partir des polymères suivants :
**A**/ 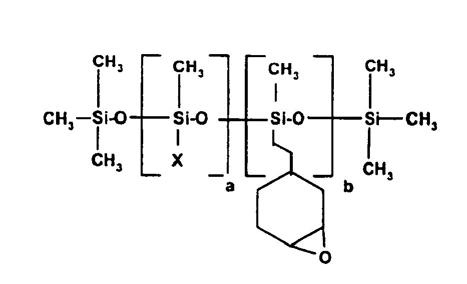
**A₁** / SILCOLEASE ® UV POLY200 : x=CH₃ ; a =70 ; b=7
**A₂** / SILCOLEASE ® UV POLY201; x=CH₃ ; a =444 ; b=35 5
**D₁** / 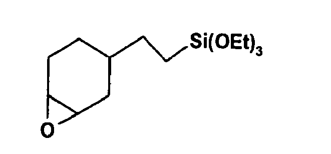
**D₂**/ 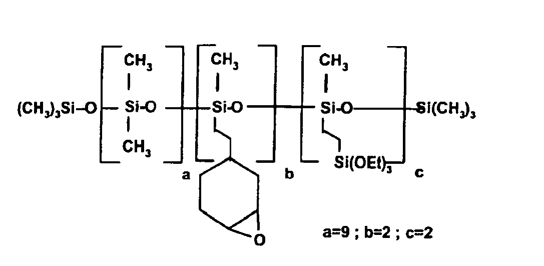
**C₂**/
   - Photoamorceur SILCOLEASE^{®} UV GATA 211 : 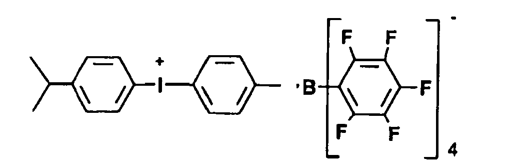
   - Photoinitiateur RHODORSIL® Photoiniator 2074
**G2**/ Silice Aérosil de surface spécifique 300 m²/g de DEGUSSA traité à l'octaméthylcyclotétrasiloxane Red 22 / pigment rouge commercialisé par SUN CHEMICAL.
Ces compositions sont ensuite appliquées à l'aide de barres d'enduction numérotées différemment de 0 à 6 pour déposer de 1 à 20g/m² sur un rectangle de tissu polyamide comprenant un élastomère silicone à la surface du type RTV polyaddition réticulé (140g/m²).

Dans un mélangeur à bras de 100 1 on introduit 40 kg d'une huile de silicone α,ω divinylée de viscosité 1,5 Pa.s qui titre 0,1 meq de vinyle (Vi) par gramme d'huile, 0,24 kg d'eau potable et 0,24 kg d'hexaméthyldisilazane. Après homogénéisation on rajoute par portions en a peu près 2 heures 13,9 kg d'une silice de combustion caractérisée par sa surface spécifique de 200 m²/g. Après environ 1 heure de mélangeage, on rajoute en à peu près 1 heure 2,27 kg d'hexaméthyldisilazane. 2 heures plus tard on commence une phase de chauffage au cours de laquelle le mélange est placé sous courant d'azote (30 m³/h); le chauffage continue jusqu'à atteindre environ 140° C, température palier qui est maintenue pendant 2 heures afin d'évacuer les matières volatiles de la composition. La suspension est alors laissée à refroidir.

Partant de cette suspension, on formule une partie A et une partie B dans des réacteurs appropriés.

La partie A contient :
- 320 g de la suspension,
- 111 g d'une huile α,ω divinylée de viscosité 100 Pa.s qui titre 0,03 meq Vi par gramme d'huile,
- 35 g de quartz broyé de granulométrie moyenne (d50) proche de 2,5 µm,
- 12 g d'une huile polyhydrogéno de viscosité 0,3 Pa.s qui titre 1,6 meq SiH par gramme d'huile,
- 12 g d'une huile α,ω dihydrogéno qui titre 1,9 meq SiH par gramme d'huile,
- 5 g de triméthoxysilane de γ méthacryloxypropyle,
- 5 g de triméthoxysilane de γ glycidoxypropyle,
- 0,7 g d'éthynylcyclohexano.

La partie B contient :
- 480 g de la suspension
- 20 g d'orthotitanate de butyle
- 1,1 g d'un catalyseur de Karstedt dosé à 10 % de platine.

On mélange ensuite 100 parties en poids de A et 10 parties en poids de B.

La réticulation s'effectue sur un convoyeur de laboratoire par exposition à une vitesse définie sous deux lampes à électrodes de 200W/cm.

Selon les conditions expérimentales une ou deux lampes sont en fonctionnement. Les lampes sont des lampes traditionnelles à spectre d'émission du mercure ou de mercure dopé par exemple au fer ou au gallium ou au plomb ...

On mesure les coefficients de friction après exposition à l'aide d'un patin de 200g relié à un dynamomètre pouvant exercer une force de 10N pour déplacer le patin. Pour faire la mesure on installe le bout de tissu sur le patin face recouverte de vernis silicone côté vitre. Un blanc est réalisé avec un tissu enduit de RTV réticulé sans vernis. L'ensemble des résultats obtenus pour les exemples de 1 à 14 sont rassemblés dans le tableau suivant.

### Compositions photoréticulables pour le vernissage des Air-Bags

| | **T** | **1** | **2** | **3** | **4** | **5** | **6** | **7** | **8** | **9** | **10** | **11** | **12** | **13** | **14** |
|---|---|---|---|---|---|---|---|---|---|---|---|---|---|---|---|
| **A₁ parts** | 0 | 100 | 90 | 0 | 0 | 0 | 0 | 0 | 0 | 0 | 50 | 70 | 0 | 20 | 20 |
| **A₂ parts** | 0 | 0 | 0 | 0 | 0 | 0 | 0 | 0 | 0 | 0 | 0 | 0 | 50 | 0 | 0 |
| **D₁ parts** | 0 | 0 | 0 | 100 | 90 | 0 | 0 | 0 | 45 | 45 | 50 | 30 | 50 | 72 | 72 |
| **D₂ parts** | 0 | 0 | 0 | 0 | 0 | 100 | 100 | 90 | 45 | 45 | 0 | 0 | 0 | 0 | 0 |
| **C₂ parts** | 0 | 2.5 | 2.5 | 2.5 | 2.5 | 2.5 | 2.5 | 2.5 | 2.5 | 2.5 | 2.5 | 2.5 | 2.5 | 2.5 | 2.5 |
| **G₂ parts** | 0 | 0 | 10 | 0 | 10 | 0 | 0 | 10 | 10 | 10 | 0 | 0 | 0 | 8 | 8 |
| **Red22 parts** | 0 | 0 | 0 | 0 | 0 | 0 | 0 | 0 | 0 | 0 | 0 | 0 | 0 | 0 | 0.4 |
| **lampe Hg 200W/cm** | 0 | 1 | 1 | 1 | 1 | 1 | 1 | 1 | 0 | 0 | 1 | 1 | 1 | 2 | 1 |
| **lamHg/Ca 200W/cm** | 0 | 1 | 1 | 1 | 1 | 0 | 0 | 0 | 0 | 0 | 1 | 1 | 1 | 0 | 0 |
| **lampHg/Ga 80W/cm** | 0 | 0 | 0 | 0 | 0 | 0 | 0 | 0 | 1 | 1 | 0 | 0 | 0 | 0 | 0 |
| **Vitesse m/min** | 0 | 15 | 15 | 15 | 15 | | 5 | 5 | | 5 | 5 | 15 | 15 | 10 | 5 |
| **dépôt g/m²** | 0 | 4 | 9 | 5 | 7.8 | 1 | 6.9 | 8 | 4.5 | 1.8 | 9 | 6.4 | 5.6 | 6.4 | 5 |
| **Coef. fric. Ks** | 3.2 | 4 | 4 | 2 | 0.6 | 2.6 | 1.5 | 0.3 | 0.3 | 0.5 | 1.1 | | 4.5 | 0.5 | 0.8 |

Les meilleures performances sont obtenues avec les polymères de type D₂/ en présence d'une charge à base de silice. Les résultats varient selon les conditions d'irradiation ; En particulier les valeurs obtenues à faible puissance exemples 8 et 9 sont très intéressantes. On peut rajouter du polymère de type A/ sans trop affecter les résultats de Ks.

### Exemple 15 :

Des essais d'application en continu de la formule décrite exemple 13 sont réalisés sur une machine représentative d'un équipement industriel (pilote ROTOMEC) à 25m/min sur une laize de tissu recouvert de RTV de 30cm.
Les conditions d'irradiation sont obtenues avec une lampe de la société Fusion avec un bulbe de type « H⁺ » de puissance 80W/cm.
3 dépôts sont réalisés.
Les coefficients de friction sont ensuite mesurés sur verre.
On obtient :
3,5 g/m² de vernis correspond à un Ks = 1,4
6,0 g/m² de vernis correspond à un Ks = 0,8
9,0 g/m² de vernis correspond à un Ks = 0,5
On retrouve bien les performances attendues pour cette formulation à dépôt comparable.

### Exemple 16 :

### Préparation de D₂

La synthèse s'effectue en deux étapes à partir d'une huile polyméthylhydrogénodiméthylsiloxane α-ω triméthylsilyle.
La synthèse s'effectue selon le schéma réactionnel décrit ci-après.

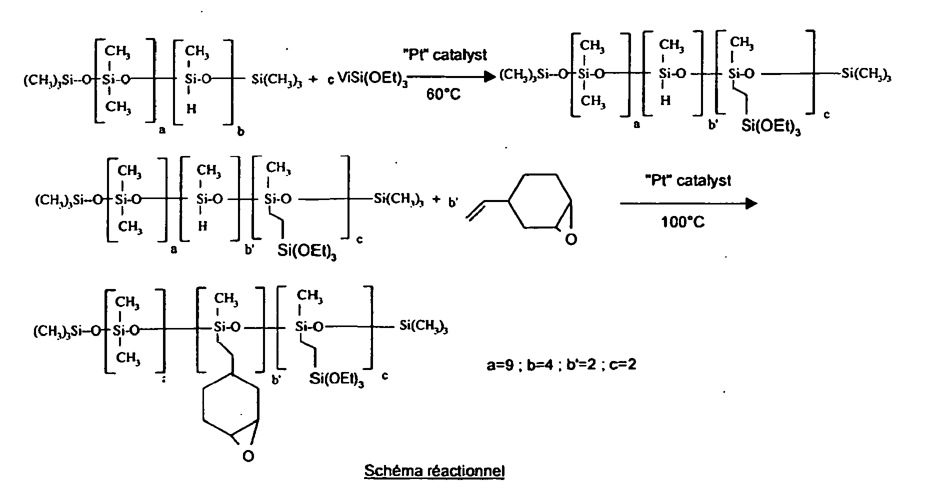

Dans un réacteur tricol muni d'une pale d'agitation centrale et de capacité 1 litre on charge 50 g de toluène et 28,8 mg d'un complexe du platine au degré d'oxydation zéro complexé par du divinyltétraméthyldisiloxane à 11,5 % en platine soit 3,31 mg de platine. On coule alors en 120 minutes 200g du polymère siloxane hydrogéné à 0,374% soit 0,748 moles H mélangé à 70,97g de vinyltriéthoxysilane (soit 0,372 moles) à 25°C puis on chauffe à 60°C la masse réactionnelle pendant deux heures. Le taux de conversion des motifs SiH est de 50% soit 0,372 moles.
On rajoute alors l'oxyde de vinylcyclohexène fraîchement distillé à raison de 57g (0,459 moles) et on porte la température de réaction à 80°C pendant trois heures et on rajoute 40 mg du complexe du platine pendant la dernière heure.
On laisse revenir à température ambiante. Le taux de conversion des motifs SiH est de 98,3%. On chauffe à 100°C et on rajoute 40 mg de complexe du platine supplémentaire puis on laisse à 100°C pendant trois heures. Le taux de conversion des motifs SiH est de 99,8 %. On soutire la masse réactionnelle dans un ballon de 500 ml (360,2 g) et on rajoute 0,3g de 2,2 thiodiéthanol puis on fait le vide et on entraîne sous balayage d'argon le toluène à 97°C dans la masse réactionnelle et 30 à 40°C en tête de colonne. Après avoir arrêté le vide et refroidi à 40°C on rajoute 1,47g de polyvinylpyridine (Reillex) et 1,53g d'eau oxygénée (Prolabo).
On chauffe à 80°C pendant deux heures et on rajoute 4,72g de sulfate de magnésium à la masse réactionnelle. On effectue alors une filtration sur carton de l'huile obtenue décolorée et le rendement massique total de la synthèse est de 86% soit 272 g.
La viscosité de l'huile est de 55 mm²/s.
La masse moléculaire moyenne en nombre est d'environ 1300 déterminée par gel perméation chromatographie.
La RMN ²⁹Si permet d'identifier et de quantifier les motifs.
La référence est du tétraméthylsilane.

| | | |
|---|---|---|
| Me₃SiO_{1/2} | δ=7ppm | soit deux motifs |
| Me₂SiO_{2/2} et MeRSiO | δ=22ppm | soit 13 motifs |
| R'Si(OEt)₃ | δ=-45/-46ppm | soit deux motifs |

La RMN¹ H complète l'analyse du produit et confirme la structure attendue du polymère D₂.

### Exemple 17:

### Exemple de formulation permettant de réaliser les formules décrites exemple là 14

### Exemple 17.1 :

On réalise la formule décrite exemple 1.
Dans un flacon en polyéthylène haute densité étanche à la lumière on mélange sous agitation mécanique vigoureuse pendant un quart d'heure à température ambiante (Agitateur IKA20 muni d'une tige tripale)
100 parts de A₁ Silcolease UV^{®} POLY200 de viscosité 350 mPa.s avec 2,5 parties de C₂ soit une dilution dans l'isopropanol à 18% de photoinitiateur Rhodorsil^{®} Photoinitiator 2074.

### Exemple 17.2 :

On réalise la formule décrite exemple 2.
Dans un flacon en polyéthylène haute densité étanche à la lumière on mélange sous
Dans un flacon en polyéthylène haute densité étanche à la lumière on mélange sous agitation mécanique vigoureuse pendant une demi heure à température ambiante (Agitateur IKA20 muni d'une tige tripale).
90 parts de Silcolease UV^{®} POLY200 A₁ de viscosité 350 mPa.s avec 10 parties de silice G₂. Lorsque le mélange est bien homogène et que la silice est incorporée on rajoute alors 2,5 parties de C₂ soit une dilution dans l'isopropanol à 18% de photoinitiateur Rhodorsil^{®} Photoinitiator 2074 et on agite vigoureusement quinze minutes supplémentaires.

### Exemple 17.3 :

On réalise la formule décrite exemple 3
Dans un flacon en polyéthylène haute densité étanche à la lumière on mélange sous agitation mécanique vigoureuse pendant un quart d'heure à température ambiante (Agitateur IKA20 muni d'une tige tripale).
100 parts de silane triéthoxysilyle à fonctionnalité époxycyclohexyle D₁ de viscosité 10 mPa.s avec 2,5 parties de C₂ soit une dilution dans l'isopropanol à 18% de photoinitiateur Rhodorsil® Photoinitiator 2074.

### Exemple 17.4 :

On réalise la formule décrite exemple 4
Dans un flacon en polyéthylène haute densité étanche à la lumière on mélange sous agitation mécanique vigoureuse pendant une demi heure à température ambiante (Agitateur IKA20 muni d'une tige tripale).
90 parts de Silane D₁ de viscosité 10 mPa.s avec 10 parties de silice G₂. Lorsque le mélange est bien homogène et que la silice est incorporée on rajoute alors 2,5 parties de C₂ soit une dilution dans l'isopropanol à 18% de photoinitiateur Rhodorsil® Photoinitiator 2074 et on agite vigoureusement quinze minutes supplémentaires.

### Exemple 17.5 et 17.6:

On réalise la formule décrite exemples 5 et 6
Dans un flacon en polyéthylène haute densité étanche à la lumière on mélange sous agitation mécanique vigoureuse pendant un quart d'heure à température ambiante (Agitateur IKA20 muni d'une tige tripale).
100 parts de polymère D₂ de viscosité 55 mPa.s dont on vient de décrire la synthèse exp : 17 avec 2,5 parties de C₂ soit une dilution dans l'isopropanol à 18% de photoinitiateur Rhodorsil® Photoinitiator 2074.

### Exemple 17.7 :

On réalise la formule décrite exemple 7
Dans un flacon en polyéthylène haute densité étanche à la lumière on mélange sous agitation mécanique vigoureuse pendant une demi heure à température ambiante (Agitateur IKA20 muni d'une tige tripale).
90 parts de polymère D₂ de viscosité 55 mPa.s dont nous venons de décrire la synthèse exp.17 avec 10 parties de silice G₂. Lorsque le mélange est bien homogène et que la silice est incorporée on rajoute alors 2,5 parties de C₂ soit une dilution dans l'isopropanol à 18% de photoinitiateur Rhodorsil® Photoinitiator 2074 et on agite vigoureusement quinze minutes supplémentaires.

### Exemple 17.8 et 17.9

On réalise la formule décrite exemples 8 et 9.
Dans un flacon en polyéthylène haute densité étanche à la lumière on mélange sous agitation mécanique vigoureuse pendant une demi heure à température ambiante (Agitateur IKA20 muni d'une tige tripale).
45 parts de silane D₁ et 45 parts de polymère D₂ de viscosité 55 mPa.s dont nous venons de décrire la synthèse exp.17 avec 10 parties de silice G₂. Lorsque le mélange est bien homogène et que la silice est incorporée on rajoute alors 2,5 parties de C₂ soit une dilution dans l'isopropanol à 18% de photoinitiateur Rhodorsil® Photoinitiator 2074 et on agite vigoureusement quinze minutes supplémentaires.

### Exemple 17.10 :

On réalise la formule décrite exemple 10
Dans un flacon en polyéthylène haute densité étanche à la lumière on mélange sous agitation mécanique vigoureuse pendant un quart d'heure à température ambiante (Agitateur IKA20 muni d'une tige tripale).
50 parts de silane D₁ et 50 parts de polymère A₁ de viscosité 350 mPa.s.
On rajoute alors 2,5 parties de C₂ soit une dilution dans l'isopropanol à 18% de photoinitiateur Rhodorsil^{®} Photoinitiator 2074 et on agite vigoureusement cinq minutes supplémentaires.

### Exemple 17.11:

On réalise la formule décrite exemple 11.
Dans un flacon en polyéthylène haute densité étanche à la lumière on mélange sous agitation mécanique vigoureuse pendant un quart d'heure à température ambiante (Agitateur IKA20 muni d'une tige tripale).
30 parts de silane D₁ et 70 parts de polymère A₁ de viscosité 350 mPa.s.
On rajoute alors 2,5 parties de C₂ soit une dilution dans l'isopropanol à 18% de photoinitiateur Rhodorsil® Photoinitiator 2074 et on agite vigoureusement cinq minutes supplémentaires.

### Exemple 17.12:

On réalise la formule décrite exemple 12.
Dans un flacon en polyéthylène haute densité étanche à la lumière on mélange sous agitation mécanique vigoureuse pendant une demi heure à température ambiante (Agitateur IKA20 muni d'une tige tripale).
50 parts de silane D₁ et 50 parts de polymère A₂ de viscosité 5000 mPa.s.
On rajoute alors 2,5 parties de C₂ soit une dilution dans l'isopropanol à 18% de photoinitiateur Rhodorsil^{®} Photoinitiator 2074 et on agite vigoureusement cinq minutes supplémentaires.

### Exemple 17.13

On réalise la formule décrite exemple 13.
Dans un flacon en polyéthylène haute densité étanche à la lumière on mélange sous agitation mécanique vigoureuse pendant une demi heure à température ambiante (Agitateur IKA20 muni d'une tige tripale).
72 parts de silane D₁ et 20 parts de SILCOLEASE^{®} UV POLY200. A₁ de viscosité 350 mPa.s dont nous venons de décrire la synthèse exp.17 avec 10 parties de silice G₂. Lorsque le mélange est bien homogène et que la silice est incorporée on rajoute alors 2,5 parties de C₂ soit une dilution dans l'isopropanol à 18% de photoinitiateur Rhodorsil^{®} Photoinitiator 2074 et on agite vigoureusement quinze minutes supplémentaires.

### Exemple 17.14

On réalise la formule décrite exemple 14.
Dans un flacon en polyéthylène haute densité étanche à la lumière on mélange sous agitation mécanique vigoureuse pendant une demi heure à température ambiante (Agitateur IKA20 muni d'une tige tripale).
72 parts de silane D₁ et 20 parts de SILCOLEASE^{®} UV POLY200 A₁ de viscosité 350 mPa.s dont nous venons de décrire la synthèse exp. 17 avec 10 parties de silice G₂. Lorsque le mélange est bien homogène et que la silice est incorporée on rajoute alors 0,4 parties de pigment rouge Red22 commercialisé par Sun chemical et on agite vigoureusement jusqu'à parfaite dilution du pigment qui se traduit par l'obtention d'une formulation rouge clair transparente. On rajoute alors 2,5 parties de C₂ soit une dilution dans l'isopropanol à 18% de photoinitiateur Rhodorsil^{®} Photoinitiator 2074 et on agite vigoureusement quinze minutes supplémentaires.

### Exemple 18 :

Les rubans de transfert thermique sont utilisés par exemple dans l'impression des étiquettes. Ils sont mis en oeuvre dans des imprimantes dont la vitesse d'impression varie entre 150 et 300mm/s . Il est très important que la tête d'impression (plate ou en coin) qui vient frapper l'autre côte de la surface contenant l'encre (cires ou résines) puisse glisser sur cette surface à température élevée comprise entre 100 et 200°C.
On utilise en général un revêtement de protection très fin compris entre 0,1 et 1 micromètre pour protéger la surface du film et améliorer l'impact de la tête d'impression sans déformer le transfert de l'encre sur le support appliqué.
Le film plastique utilisé pour transférer l'encre est à base de polyester très fin de quelques microns d'épaisseur.
Une bonne mesure de la qualité du revêtement de protection se fait par l'aptitude au glissant de ce revêtement.
On mesure alors le coefficient de friction après exposition à l'aide d'un patin de 200g relié à un dynamomètre pouvant exercer une force de 10N pour déplacer le patin.
Pour faire la mesure on installe le film de polyester recouvert d'une couche de revêtement protecteur à base de silicone photoréticulé de préférence de moins de un micromètre. Un blanc est réalisé avec le film de polyester ne contenant pas de silicone.
Les résultats obtenus sont rassemblés dans le tableau suivant pour des compositions renfermant différentes parts de :
A₁/ SILCOLEASE^{®} UV POLY200
A₂/ SILCOLEASE^{®} UV POLY201
C₂/ 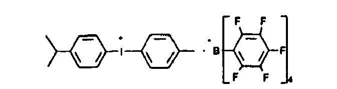 en solution isopropanolique à 18% .
G₂/Silice Aerosil 300m²/g
Les films polyesters sont enduits de silicone sur une tête 5 cylindre, à une vitesse de 50m/min (0,5g/m²) puis photoréticulés avec une lampe de 120W/cm.

Les valeurs de coefficient de glissement ou de friction dynamique obtenues telles que décrit précédemment sont rapportées dans le tableau ci-dessous.

### Formulations silicone :

| | **Témoin** | **1'** | **2'** | **3'** | **4'** | **5'** |
|---|---|---|---|---|---|---|
| A,parts | 0 | 100 | 100 | 75 | 22 | 60 |
| D₁ parts | 0 | 0 | 0 | 25 | 75 | 35 |
| C₂ parts | 0 | 2.5 | 3 | 2.5 | 2.5 | 2.5 |
| G₂ parts | 0 | 0 | 0 | 0 | 3 | 5 |
| Coef.fric.Kd | 0.3 | 3 | 1 | 0.3 | 0.25 | 0.4 |

### Exemple 19 :

On peut également chercher à obtenir des films plastiques principalement à base des polyéthylène ou de polypropylène destinés à l'emballage pour protéger des valeurs marchandes. Dans ce cas on peut rechercher à avoir un survernissage à base de silicone pour garder des propriétés d'anti-adhérence.
On demande en plus à ce type de revêtement de garder un glissant au moins équivalent au film plastique de départ imprimé ou pas.
On a réalisé les essais d'application de couches silicones à moins de 1 micromètre à 50 m/min sur film polyéthylène traité coronna (décharge électrique qui permet d'augmenter la tension superficielle du film et d'assurer un bon accrochage du silicone photoréticulable sur cette surface). Le silicone est photoréticulé en présence d'une lampe mercure de 120W/cm. On a utilisé deux supports. Un support vierge, et un support imprimé avec une encre flexo^{®} cationique bleue d'épaisseur 3µm.
Dans les deux cas on applique 0,5g/m² de silicone de la formulation 5' selon l'exemple 18 précédemment décrite.
Dans les deux cas, on obtient une couche de silicone parfaitement réticulée dont le coefficient de friction est voisin de 0,4.
On peut appliquer les compositions silicones prémélangées à l'avance sous la forme de compositions monocomposantes ou faire le mélange silicone photoamorceur au dernier moment.

## Revendications

1. Composition silicone utile notamment pour la réalisation de vernis ayant en particulier des propriétés anti-friction, cette composition étant du type de celles comprenant au moins un polyorganosiloxane (POS) réticulable par l'intermédiaire de groupements fonctionnels de réticulation (GFR) par voie cationique et/ou radicalaire choisis parmi les groupements comprenant au moins une fonction éthyléniquement insaturée acrylate et/ou alcényléther et/ou époxyde et/ou oxéthane et une quantité efficace de système amorceur cationique comprenant comme amorceur et/ou photoamorceur, un produit choisi parmi les sels d'onium d'un élément des groupes 15 à 17 de la classification périodique ou d'un complexe organométallique d'un élément des groupes 4 à 10 de la classification périodique,
Δ dont *l'entité cationique* est sélectionnée parmi :
1) les sels d'onium de formule (I) :
[(R¹)ₙ - A - CR²)ₘ]⁺ (I)
formule dans laquelle :
• A représente un élément des groupes 15 à 17 tel que par exemple : I, S, Se, P ou N,
• R¹ représente un radical aryle carbocyclique ou hétérocyclique en C₆-C₂₀, ledit radical hétérocyclique pouvant contenir comme hétéroéléments de l'azote ou du soufre ;
• R² représente R¹ ou un radical alkyle ou alkényle linéaire ou ramifié en C₁-C₃₀ ; lesdits radicaux R¹ et R² étant éventuellement substitués par un groupement alcoxy en C₁-C₂₅, alkyle en C₁-C₂₅, nitro, chloro, bromo, cyano, carboxy, ester ou mercapto ;
• n est un nombre entier allant de 1 à v + 1, v étant la valence de l'élément A,
• m est un nombre entier allant de 0 à v - 1 avec n + m = v + 1,
2) les sels de 4-oxoisothiochromanium de formule structurale V, 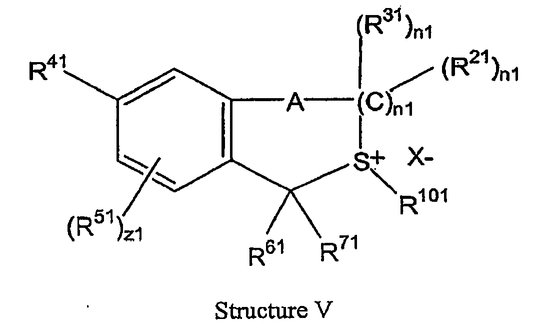 notamment le sel de sulfonium du 2-éthyl-4-oxoisothiochromanium ou de 2-dodécyl-4-oxoisothiochromanium, dans laquelle
A représente 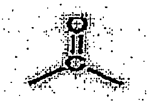 n1 = 1
z1 = un entier entre 0 et 3
X représente un groupe de formule M¹Y¹ᵣ₁ (1) ou de formule Q¹(2), où dans M¹Y¹ᵣ₁ (1) : M¹ = Sb, As, P, B ou Cl, Y¹ représente un halogène (de préférence F ou Cl) ou O et où r1 est un entier entre 4 et 6, la formule Q¹(2) représente un acide sulfonique R⁸¹-SO₃ où R⁸¹ est un groupe alkyle ou aryle, ou un groupe alkyle ou aryle substitué par un halogène, de préférence F ou Cl,
R¹⁰¹ représente un groupe alkyle ou cycloalkyle, de préférence en C₁-C₂₀, ou un groupe aryle,
R²¹ représente un hydrogène, un groupe alkyle, alcényle, cycloalcényle ou cycloalkyle, de préférence C₁-C₂₀, ou un groupe aryle, tous les R²¹ étant indépendants les uns des autres,
R³¹ représente un hydrogène, un groupe alkyle, alcényle, cycloalcényle ou cycloalkyle, de préférence C₁-C₂₀, ou un groupe aryle, tous les R³¹ étant indépendants les uns des autres,
R⁴¹ représente un hydrogène, un halogène, un groupe alcényle, par exemple vinyle, cycloalcényle, alkyle, ou cycloalkyle, de préférence en C₁-C₂₀, un groupe alcoxy ou thioalcoxy, de préférence en C₁-C₂₀, un groupe poly(alkylènoxyde) avec jusqu'à 10 unités alkylènoxydes terminé par un hydroxyle ou un alkyle (C₁-C₁₂), un groupe aryle, un groupe aryloxy ou thioaryloxy,
R⁵¹ représente un halogène, un groupe alkyle, ou cycloalkyle, de préférence en C₁-C₂₀, un groupe alcoxy ou thioalcoxy, de préférence en C₁-C₂₀, un groupe poly(alkylènoxyde) avec jusqu'à 10 unités alkylènoxydes terminé par un hydroxyle ou un alkyle (C₁-C₁₂), un groupe aryle, un groupe aryloxy ou thioaryloxy,
R⁶¹ représente un hydrogène, un groupe alkyle, alcényle, cycloalcényle ou cycloalkyle, de préférence en C₁-C₂₀, ou un groupe aryle,
R⁷¹ représente un hydrogène, un groupe alkyle, alcényle, cycloalcényle ou cycloalkyle, de préférence en C₁-C₂₀, ou un groupe aryle,
3) les sels de sulfonium dans lesquelles l'entité cationique comprend:
→ 3.1. au moins une espèce polysulfonium de formule III.1. 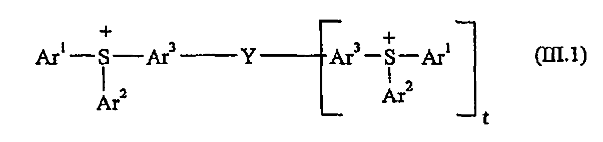 dans laquelle :
- les symboles Ar¹, qui peuvent être identiques ou différents entre eux, représentent chacun un radical monovalent phényle ou naphtyle, éventuellement substitué avec un ou plusieurs radicaux choisis parmi : un radical alkyle linéaire ou ramifié en C₁ - C₁₂, de préférence en C₁-C₆, un radical alkoxy linéaire ou ramifié en C₁ - C₁₂, de préférence en C₁-C₆, un atome d'halogène, un groupe - OH, un groupe -COOH, un groupe ester -COO-alkyle où la partie alkyle est un reste linéaire ou ramifié en C₁ - C₁₂, de préférence en C₁-C₆, et un groupement de formule -Y⁴-Ar² où les symboles Y⁴ et Ar² ont les significations données juste ci-après,
- les symboles Ar², qui peuvent être identiques ou différents entre eux ou avec Ar¹, représentent chacun un radical monovalent phényle ou naphtyle, éventuellement substitué avec un ou plusieurs radicaux choisis parmi : un radical alkyle linéaire ou ramifié en C₁-C₁₂, de préférence en C₁-C₆, un radical alkoxy linéaire ou ramifié en C₁-C₁₂, de préférence en C₁-C₆, un atome d'halogène, un groupe -OH, un groupe -COOH, un groupe ester -COO- alkyle où la partie alkyle est un reste linéaire ou ramifié en C₁-C₁₂, de préférence en C₁-C₆,
- les symboles Ar³, qui peuvent être identiques ou différents entre eux, représentent chacun un radical divalent phénylénè ou naphtylène, éventuellement substitué avec un ou plusieurs radicaux choisis parmi : un radical alkyle linéaire ou ramifié en C₁-C₁₂, de préférence en C₁-C₆, un radical alkoxy linéaire ou ramifié en C₁-C₁₂, de préférence en C₁-C₆, un atome d'halogène, un groupe - OH, un groupe -COOH, un groupe ester -COO-alkyle où la partie alkyle est un reste linéaire ou ramifié en C₁-C₁₂, de préférence en C₁-C₆,
- t est un nombre entier égal à 0 ou 1,
avec les conditions supplémentaires selon lesquelles :
+ quand t = 0, le symbole Y est alors un radical monovalent Y¹ représentant le groupement de formule :
Y¹ : 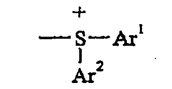 où les symboles Ar¹ et Ar² possèdent les significations données ci-avant,
+ quand t = 1 :
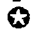 d'une part, le symbole Y est alors un radical divalent ayant les significations Y² à Y⁴ suivantes :
• Y² : un groupement de formule : 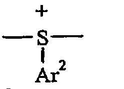
où le symbole Ar² possède les significations données ci-avant,
• Y³ : un lien valentiel simple,
• Y⁴ : un reste divalent choisi parmi : 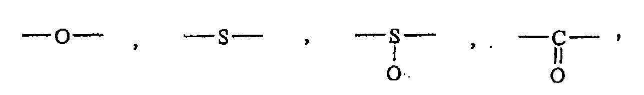 un reste alkylène linéaire ou ramifié en C₁-C₁₂, de préférence en C₁-C₆, et un reste de formule -Si(CH₃)₂O-,
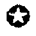 d'autre part, dans le cas uniquement où le symbole Y représente Y³ ou Y⁴, les radicaux Ar¹ et Ar² (terminaux) possèdent, outre les significations données ci-avant, la possibilité d'être reliés entre eux par le reste Y' consistant dans Y'¹ un lien valentiel simple ou dans Y'² un reste divalent choisi parmi les restes cités à propos de la définition de Y⁴, qui est installé entre les atomes de carbone, se faisant face, situés sur chaque cycle aromatique en position ortho par rapport à l'atome de carbone directement relié au cation S⁺;
→ 3.2. et/ou au moins une espèce monosulfonium possédant un seul centre cationique S⁺ par mole de cation et consistant dans la plupart des cas dans des espèces de formule : 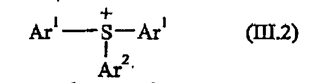
dans laquelle Ar¹ et Ar² ont les significations données ci-avant à propos de la formule (III.1), incluant la possibilité de relier directement entre eux un seul des radicaux Ar¹ à Ar ² selon la manière indiquée ci-avant à propos de la définition de la condition supplémentaire en vigueur quand t = 1 dans la formule (III.1) en faisant appel au reste Y' ;
4) les sels organométalliques de formule (IV) :
(L¹L²L³M)^{+q} (IV)
formule dans laquelle:
• M représente un métal du groupe 4 à 10, notamment du fer, manganèse, chrome, cobalt.
• L¹ représente 1 ligand lié au métal M par des électrons π, ligand choisi parmi les ligands η³-alkyl, η⁵- cyclopendadiènyl et η⁷ - cycloheptratriènyl et les composés η⁶ - aromatiques choisis parmi les ligands η⁶-benzène éventuellement substitués et les composés ayant de 2 à 4 cycles condensés, chaque cycle étant capable de contribuer à la couche de valence du métal M par 3 à 8 électrons π
• L2 représente un ligand lié au métal M par des électrons π, ligand choisi parmi les ligands η7-cycloheptatriènyl et les composés η6-aromatiques choisis parmi les ligands η6- benzène éventuellement substitués et les composés ayant de 2 à 4 cycles condensés, chaque cycle étant capable de contribuer à la couche de valence du métal M par 6 ou 7 électrons π ;
• L3 représente de 0 à 3 ligands identiques ou différents liés au métal M par des électrons σ, ligand(s) choisi(s) parmi CO et NO2+ ; la charge électronique totale q du complexe à laquelle contribuent L¹, L² et L³ et la charge ionique du métal M étant positive et égale à 1 ou 2;
Δ *l'entité anionique* ayant pour formule :
[X¹X²ₐR_{b}]⁻
formule dans laquelle:
- a et b sont des nombres entiers allant pour a de 0 à 6 et pour b de 0 à 6 avec a + b ≥ 2 ;
- les symboles X¹ représentent des éléments choisis dans les colonnes 3a, 4a, 5a de la classification périodique, de préférence dans le groupe comprenant : B, P et Sb ; les symboles X² représentent :
* un atome d'halogène (chlore, fluor) avec a = 0 à 3,
* une fonction OH avec a = 0 à 2,
- les symboles R sont identiques ou différents et représentent :
▷ un radical phényle substitué par au moins un groupement électroattracteur tel que par exemple OCF₃, CF₃, NO₂, CN, et/ou par au moins 2 atomes d'halogène (fluor tout particulièrement), et ce lorsque l'entité cationique est un onium d'un élément des groupes 15 à 17
▷ un radical phényle substitué par au moins un élément ou un groupement électroattracteur notamment atome d'halogène (fluor tout particulièrement), CF₃, OCF₃, NO₂, CN, et ce lorsque l'entité cationique est un complexe organométallique d'un élément des groupes 4 à 10
▷ un radical aryle contenant au moins deux noyaux aromatiques tel que par exemple biphényle, naphtyle, éventuellement substitué par au moins un élément ou un groupement électroattracteur, notamment un atome d'halogène (fluor tout particulièrement), OCF₃, CF₃, NO₂, CN, quelle que soit l'entité cationique ;
cette composition étant **caractérisée en ce qu'**elle comporte en outre des molécules substituées par des groupements fonctionnels secondaires (GFS) portés par au moins un atome de silicium par molécule et sélectionnés parmi ceux comprenant au moins un motif alcoxy et/ou énoxy et/ou carboxy.

2. Composition selon la revendication 1, **caractérisée en ce qu'**elle comprend :
- A - au moins un POS porteur de GFR;
- B - au moins un silane et/ou un POS porteur de GFS, ces derniers représentant de préférence au moins 0,5 % et plus préférentiellement encore au moins 1 % en poids de B ;
- C - au moins un système photoamorceur tel que défini dans la revendication 1.

3. Composition selon la revendication 1, **caractérisée en ce qu'**elle comprend :
- C - au moins un système photoamorceur tel que défini dans la revendication 1
- D - au moins un POS porteur de GFR et de GFS.

4. Composition selon la revendication 1, **caractérisée en ce qu'**elle comprend:
- A - au moins un POS porteur de GFR
- C - au moins un système photoamorceur tel que défini dans la revendication 1
- D - au moins un silane porteur de GFR et de GFS, le GFR étant de type (méth)acrylate et/ou vinyléther et/ou époxyde et/ou oxéthane.

5. Composition selon l'une quelconque des revendications 1 à 4, **caractérisée en ce qu'**elle comprend en outre :
- E - éventuellement au moins un diluant réactif organique choisi parmi les résines organiques de type époxyde et/ou vinyléther et/ou oxéthanne ;
- F - éventuellement au moins un pigment organique ou inorganique ;
- G - éventuellement une charge, de préférence silicique ;
- H - éventuellement au moins un photosensibilisateur, de préférence sélectionné parmi les (poly)aromatiques (éventuellement métalliques) et/ou les hétérocycliques.

6. Composition selon l'une quelconque des revendications 2 ou 5 **caractérisée en ce que** les POS en tant que composé A tel que défini dans la revendication 2 sont des époxysilicones et/ou des vinyléthersilicones qui sont :
→ soit linéaires ou sensiblement linéaires et constitués de motifs de formule (II.1), terminés par des motifs de formule (II.2),
→ soit cycliques et constitués par des motifs de formule (II.1): 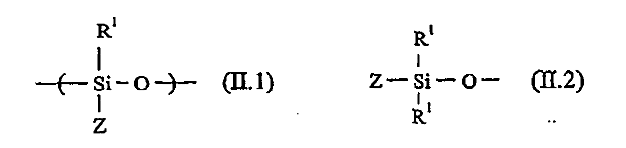
formules dans lesquelles :
• les symboles R¹ sont semblables ou différents et représentent :
- soit un radical alkyle linéaire ou ramifié en C₁-C₆, éventuellement substitué, avantageusement par un ou des halogènes, les radicaux alkyles éventuellement substitués préférés étant : méthyle, éthyle, propyle, octyle et 3,3,3 trifluoropropyle,
- soit un radical cycloalkyle en C₅-C₈, éventuellement substitué,
- soit un radical aryle ou aralkyle, éventuellement substitué :
. notamment par des halogènes et/ou des alcoxyles,
. les radicaux phényle, xylyle, tolyle et dichlorophényle étant tout particulièrement sélectionnés,
• les symboles Z sont semblables ou différents et représentent :
- soit le radical R¹,
- soit un groupement GFR correspondant à un reste époxyde ou vinyléther relié au silicium par l'intermédiaire d'un radical divalent contenant, avantageusement, de 2 à 20 atomes de carbone comportant, éventuellement, un hétéroatome,
l'un au moins des symboles Z correspondant à un groupement GFR.

7. Composition selon l'une quelconque des revendications 2 ou 5 **caractérisée en ce que** les POS en tant que composé A tel que défini dans la revendication 2 sont des époxysilicones de formules **(A.I) (A.II) (A.III)** suivantes : 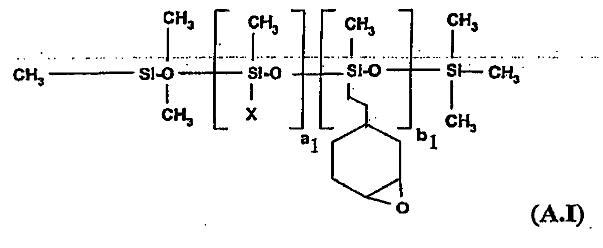 avec X = CH₃ ; Phényle ; Cycloalkyle ; alkyle C₁-C₁₈; alcényle ;
- OH; H ; CH₂-CH₂-CH₂-OH ; CH₂-CH₂-CF₃ ; -(CH₂)ₙ-CF₃, n = 1 à 20 ; 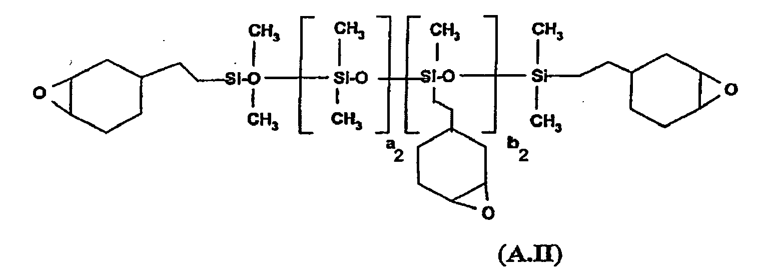
- a₁, a₂ et b₁, b₂ étant définis comme suit dans ces formules (**A.I**) et (**A.II**)
| | | |
|---|---|---|
| | 1 ≤ a₁, a₂ | 1 ≤ b₁, b₂ |
| de préférence | 1 ≤ a₁, a₂ ≤ 5000 | 1 ≤ b₁, b₂ ≤ 500 |
| et plus préférentiellement encore | 1 ≤ a₁, a₂ ≤ 1000 | 1 ≤ b₁, b₂ ≤ 100; |
- a₂, b₂ étant = 0 dans la formule (**A.II**) pour donner le disiloxane époxydé

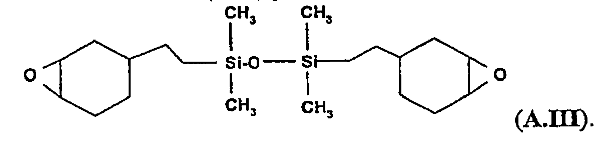

8. Composition selon l'une quelconque des revendications 2, 5 à 7, **caractérisée en ce que** le (ou les) composé(s) B est (sont) choisi(s) parmi celui (ou ceux) de formule B suivante :
(**B**) R²ₓ[GFS]_{y}SiO_{4-(x+y)/2}
dans laquelle :
- x=0, 1, 2 ou 3
- Y = 1, 2, 3 ou 4
- les radicaux R² sont identiques ou différents entre eux et correspondent à un alkyle linéaire ou ramifié, un cycloalkyle, un hydroxyle, un hydrogène, un vinyle, un -CF₃, un -(CH₂)ₘ-CF₃ avec m = 1 à 50,
- les GFS sont identiques ou différents entre eux et correspondent à
° un alcoxy,
de préférence :
- OR³ avec R³ représentant un alkyle linéaire ou ramifié en C₁-C₃₀ ou un cycloalkyle;
- (OR⁴)ₚ-OR⁵; -(R⁶)_{q}-Si(OR⁷)ᵣ(R⁸)ₜ
avec R⁴, R⁷, R⁸ identiques ou différents entre eux et répondant à la même définition que celle donnée ci-dessus pour R³ et avec R⁶ identiques ou différents entre eux et correspondant de préférence à un alkylène (avantageusement un méthylène); p, q = 1 à 50, de préférence 1 à 10; r=1,2 ou 3 et t=0,1 ou 2;
° un énoxy,
de préférence :
- O-CH = CH-R⁸;
- (R⁹)ᵤ-Si(OCH = CHR¹⁰)ᵥ(R¹¹)_{w};
avec R⁸, R¹⁰, R¹¹ identiques ou différents entre eux et répondant à la même définition que celle donnée ci-dessus pour R³, et avec R⁹ répondant à la même définition que celle donnée ci-dessus pour R⁶;
u = 1 à 50 de préférence 1 à 10,
v = 1,2 ou 3 et w= 0, 1 ou 2 ;
° un carboxy,
de préférence :
- OCOR¹² ;
- (R¹³)_{z}-Si(OCOR¹⁴)_{z1}(R¹⁵)_{z2} ;
avec R¹², R¹⁴ tels que définis ci-dessus pour R⁸, R¹⁰, R¹¹ ;
R¹³ tels que définis ci-dessus pour R⁹ ;
et
z = 1 à 50 de préférence 1 à 10,
z₁ = 1, 2 ou 3 et z₂ = 0, 1 ou 2.

9. Composition selon l'une quelconque des revendications 3 ou 4 **caractérisée en ce que** le POS ou le silane en tant que composé D tel que défini dans la revendication 3 (POS D) ou dans la revendication 4 (silane D) comprend des GFS tels que définis dans la revendication 8 et des GFR de type (méth)acrylate et/ou vinyléther et/ou époxyde et/ou oxéthane, ce POS ou le silane D comprenant de préférence des GFS de type alcoxy et des GFR de type époxyde.

10. Composition selon la revendication 9, dans laquelle ledit POS D correspond aux POS de formules **(D', D", D"')** suivantes : 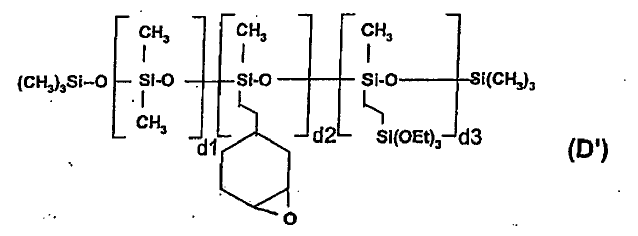 avec
| | | | |
|---|---|---|---|
| | 0≤d₁ | 1≤d₂ | 1 ≤ d₃ |
| de préférence | 0≤d₁≤5000 | 1≤d₂≤500 | 1 ≤d₃≤500 |
| et plus préférentiellement encore | 0≤d₁≤1000 | 1≤d₂≤ 100 | 1≤d₃ ≤ 100 |

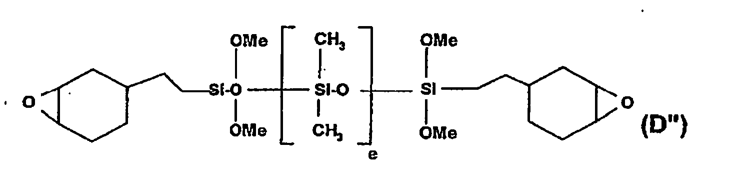

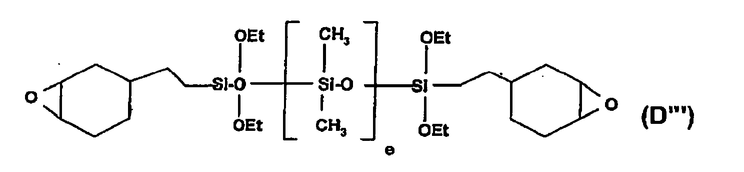
avec Me= méthyle ; Et = éthyle
| | |
|---|---|
| | 0 ≤ e |
| de préférence | 0 ≤ e ≤ 5000 |
| et plus préférentiellement encore | 0 ≤ e ≤ 1000. |

11. Composition selon la revendication 9, dans laquelle le silane D correspond au silane de formule **D₁:**

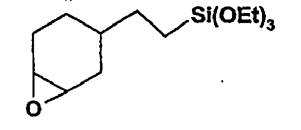

12. Application de la composition selon l'une quelconque des revendications 1 à 11 à titre de vernis anti-friction sur un support, comportant de préférence un substrat, éventuellement revêtu d'au moins une couché d'élastomère silicone.

13. Application selon la revendication 12, **caractérisé en ce qu'**elle consiste essentiellement :
- à enduire un support à l'aide de la composition selon l'une quelconque des revendications 1 à 11
- et à exposer la surface ainsi enduite à des rayonnements actiniques et/ou à un faisceau d'électrons et/ou à la chaleur, de manière à faire réticuler la couche de vernis.

14. Support vernis ayant des propriétés anti-friction, telles qu'obtenues par l'application selon la revendication 12 ou 13.

15. Support vernis, selon la revendication 14, **caractérisé en ce qu'**il comprend un substrat, revêtu sur au moins une de ses faces d'au moins une couche d'élastomère silicone réticulable ou au moins partiellement réticulé de préférence choisi parmi :
- les silicones RTV polyaddition ou polycondensation,
- et/ou les silicones EVC au peroxyde,
- et/ou les silicones LSR polyaddition,
le vernis anti-friction obtenu à partir de la composition selon l'une quelconque des revendications 1 à 11 étant appliqué sur la (ou les) couche(s) (supérieure(s)) d'élastomère silicone.

16. Support selon la revendication 15, **caractérisé en ce qu'**il est destiné à être utilisé pour la fabrication de coussins gonflables de protection individuelle d'occupant de véhicule, de rubans à transfert thermique, ou de films d'emballage de protection.

17. Coussin gonflable de protection individuelle d'occupant de véhicule **caractérisé en ce qu'**il est réalisé à partir du support selon la revendication 15.

18. Ruban à transfert thermique **caractérisé en ce qu'**il est réalisé à partir du support selon la revendication 15.

19. Film d'emballage **caractérisé en ce qu'**il est réalisé à partir du support selon la revendication 15.

## Claims

1. A silicone composition useful in particular for the production of varnish having in particular anti-friction properties, this composition being of the type comprising at least one polyorganosiloxane (POS) which can be crosslinked by means of crosslinking functional groups (CFG) by the cationic and/or free-radical route selected from the groups comprising at least one acrylate and/or alkenylether and/or epoxide and/or oxetane ethylenically unsaturated function, and an effective quantity of a cationic initiator system comprising, as thermal initiator and/or photoinitiator, a product chosen from the onium salts of an element of groups 15 to 17 of the Periodic Table or the salts of an organometallic complex of an element of groups 4 to 10 of the Periodic Table,
Δ whose *cationic entity* is selected from:
1) the onium salts of formula (**I**):
[(R¹)ₙ - A - (R²)ₘ]⁺ (**I**)
in which formula:
• A represents an element of groups 15 to 17 such as for example: I, S, Se, P or N,
• R¹ represents a carbocyclic or heterocyclic C₆-C₂₀ aryl radical, it being possible for said heterocyclic radical to contain, as heteroelements, nitrogen or sulfur;
• R² represents R¹ or a linear or branched C₁-C₃₀ alkyl or alkenyl radical, said radicals R¹ and R² being optionally substituted with a C₁-C₂₅ alkoxy, C₁-C₂₅ alkyl, nitro, chloro, bromo, cyano, carboxyl, ester or mercapto group;
• n is an integer ranging from 1 to v + 1, v being the valency of the element A,
• m is an integer ranging from 0 to v - 1 with n + m = v + 1,
2) the oxoisothiochromanium salts having structural formula V: 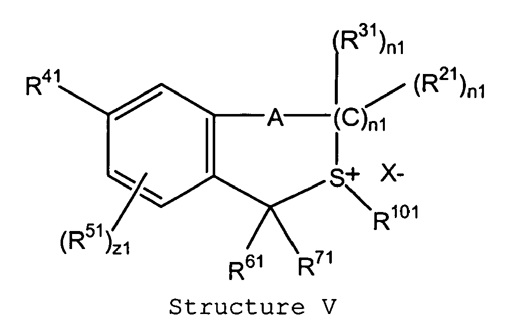 in particular the sulfonium salt of 2-ethyl-4-oxoisothiochromanium or of 2-dodecyl-4-oxoisothiochromanium, wherein:
• A represents 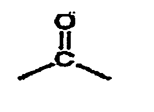
• n1 = 1
• z1 = an integer between 0 and 3
• X represents a group of the formula M¹Y¹ᵣ₁ (1) or the formula Q¹ (2), wherein in M¹Y¹ᵣ₁ (1) : M¹ = Sb, As, P, B or Cl, Y¹ represents a halogen (preferably F or Cl) or O, and r1 is an integer between 4 and 6, the formula Q¹ (2) represents a sulfonic acid R⁸¹-SO₃ wherein R⁸¹ is an alkyl or aryl group or a halogen-substituted, preferably F or Cl, alkyl or aryl group
• R¹⁰¹ represents an alkyl or cycloalkyl group, preferably C₁-C₂₀, or an aryl group,
• R²¹ represents hydrogen, an alkyle, alkenyl, cycloalkenyl or cycloalkyl group, preferably C₁-C₂₀, or aryl group, all R²¹ being independent of each other,
• R³¹ represents hydrogen, an alkyl, alkenyl, cycloalkenyl or cycloalkyl group, preferably C₁-C₂₀, or aryl group, all R³¹ being independent of each other,
• R⁴¹ represents hydrogen, halogen, an alkenyl, for instance a vinyl group, a cycloalkenyl, an alkyle or cycloalkyl group, preferably C₁-C₂₀, an alkoxy or thioalkoxy group, preferably C₁-C₂₀, a hydroxyl- or alkyl (C₁-C₁₂) terminated poly(alkylenoxyde) group with up to 10 alkylenoxyde units, an aryl group, an aryloxy group or thioaryloxy group,
• R⁵¹ represents halogen, an alkyl ou cycloalkyl group, preferably C₁-C₂₀, an alkoxy or thioalkoxy group, preferably C₁-C₂₀, a hydroxyl- or alkyl (C₁-C₁₂) terminated poly(alkylenoxyde) group with up to 10 alkylenoxyde units, an aryl group, an aryloxy group or thioaryloxy group,
• R⁶¹ represents hydrogen, an alkyl, alkenyl, cycloalkenyl ou cycloalkyl group, preferably C₁-C₂₀, or an aryl group,
• R⁷¹ represents hydrogen, an alkyl, alkenyl, cycloalkenyl ou cycloalkyl group, preferably C₁-C₂₀, or an aryl group,
3) the sulfonium salts in which the cationic entity comprises:
• 3.1. at least one polysulfonium species of formula III.1. 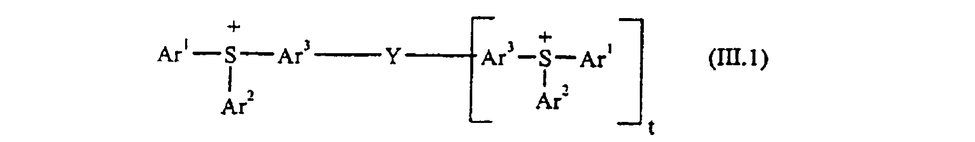
in which:
- the symbols Ar¹, which may be mutually identical or different, each represent a monovalent phenyl or naphthyl radical optionally substituted with one or more radicals chosen from: a linear or branched C₁-C₁₂, preferably C₁-C₆, alkyl radical, a linear or branched C₁-C₁₂, preferably C₁-C₆, alkoxy radical, a halogen atom, an -OH group, a -COOH group, an ester group -COO-alkyl where the alkyl portion is a linear or branched C₁-C₁₂, preferably C₁-C₆, residue, and a group of formula -Y⁴-Ar² where the symbols Y⁴ and Ar² have the meanings given just below,
- the symbols Ar², which may be mutually identical or different or with Ar¹, each represent a monovalent phenyl or naphthyl radical optionally substituted with one or more radicals chosen from: a linear or branched C₁-C₁₂, preferably C₁-C₆, alkyl radical, a linear or branched C₁-C₁₂, preferably C₁-C₆, alkoxy radical, a halogen atom, an -OH group, a -COOH group, an ester group -COO-alkyl where the alkyl portion is a linear or branched C₁-C₁₂, preferably C₁-C₆, residue,
- the symbols Ar³, which may be mutually identical or different, each represent a divalent phenylene or naphthylene radical optionally substituted with one or more radicals chosen from: a linear or branched C₁-C₁₂, preferably C₁-C₆, alkyl radical, a linear or branched C₁-C₁₂, preferably C₁-C₆, alkoxy radical, a halogen atom, an -OH group, a -COOH group, an ester group -COO-alkyl where the alkyl portion is a linear or branched C₁-C₁₂, preferably C₁-C₆, residue,
- t is an integer equal to 0 or 1, with the additional conditions according to which:
+ when t = 0, the symbol Y is then a monovalent radical Y¹ representing the group of formula:
Y¹: 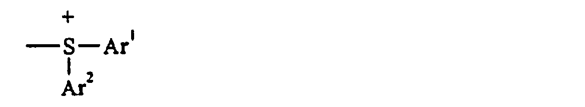
where the symbols Ar¹ and Ar² have the meanings given above, + when t = 1:
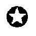 on the one hand, the symbol Y is then a divalent radical having the following meanings Y² to Y⁴:
Y²: a group of formula: 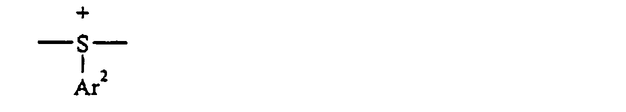 where the symbol Ar² has the meanings given above,
Y³: a single valency bond,
Y⁴: a divalent residue chosen from: 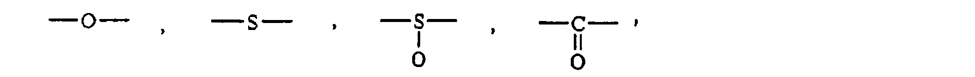 a linear or branched C₁-C₁₂, preferably C₁-C₆, alkylene residue, and a residue of formula -Si(CH₃)₂O-,
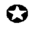 on the other hand, in the case solely where the symbol Y represents Y³ or Y⁹, the radicals Ar¹ and Ar² (terminal) possess, in addition to the meanings given above, the possibility of being linked to each other by the residue Y' consisting in Y'¹ a single valency bond or in Y'² a divalent residue chosen from the residues cited in relation to the definition of Y⁴, which is seated between the carbon atoms, facing one another, situated on each aromatic ring at the ortho position with respect to the carbon atom directly linked to the cation S⁺;
• 3.2. and/or at least one mono-sulfonium species possessing a single cationic center S⁺ per mol of cation and consisting in most cases in species of formula: 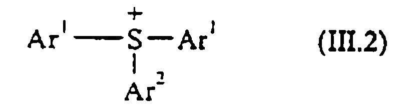
in which Ar¹ and Ar² have the meanings given above in relation to formula (III.1), including the possibility of directly linking to one another only one of the radicals Ar¹ to Ar² in the manner indicated above in relation to the definition of the additional condition which applies when t = 1 in formula (II), involving the residue Y';
4) the organometallic salts of formula **(IV):**
(L¹L²L³M)^{+q} **(IV)**
in which formula:
• M represents a metal of group 4 to 10, in particular iron, manganese, chromium, cobalt and the like
• L¹ represents 1 ligand linked to the metal M by π electrons, a ligand chosen from the ligands η³- alkyl, η⁵-cyclopendadienyl and η⁷-cycloheptratrienyl and the η⁶-aromatic compounds chosen from the optionally substituted η⁶-benzene ligands and the compounds having from 2 to 4 fused rings, each ring being capable of contributing to the valency layer of the metal M by 3 to 8 π electrons;
• L² represents a ligand linked to the metal M by π electrons, a ligand chosen from the ligands η⁷-cycloheptatrienyl and the η⁶-aromatic compounds chosen from the optionally substi-tuted η⁶-benzene ligands and the compounds having from 2 to 4 fused rings, each ring being capable of contributing to the valency layer of the metal M by 6 or 7 π electrons;
• L³ represents from 0 to 3 identical or different ligands linked to the metal M by σ electrons, ligand(s) chosen from CO and NO₂⁺; the total electron charge q of the complex to which L¹, L² and L³ contribute and the ionic charge of the metal M being positive and equal to 1 or 2;
Δ the *anionic entity* having the formula:
[X¹X²ₐR_{b}]-
in which formula:
- a and b are integers ranging, for a, from 0 to 6 and, for b, from 0 to 6 with a + b ≥ 2;
- the symbols X¹ represent elements chosen from groups IIIA, IVA, VA of the Periodic Table, preferably from the group comprising: B, P and Sb;
- the symbols X² represent:
a halogen atom (chlorine, fluorine) with a = 0 to 3,
an OH functional group with a = 0 to 2,
- the symbols R are identical or different and represent:
a phenyl radical substituted with at least one electron-attracting group such as for example OCF₃, CF₃, NO₂, CN, and/or with at least 2 halogen atoms (fluorine most particularly), and this being when the cationic entity is an onium of an element of groups 15 to 17,
a phenyl radical substituted with at least one element or one electron-attracting group, in particular a halogen atom (fluorine most particularly), CF₃, OCF₃, NO₂ CN, and this being when the cationic entity is an organo-metallic complex of an element of groups 4 to 10
an aryl radical containing at least two aromatic nuclei such as for example biphenyl, naphthyl, optionally substituted with at least one element or one electron-attracting group,
in particular a halogen atom (fluorine most particularly), OCF₃, CF₃, NO₂, CN, regardless of the cationic entity;
this composition being **characterized in that** it comprises, in addition, molecules substituted with secondary functional groups (SFG) carried by at least one silicon atom per molecule and preferably selected from those comprising at least one alkoxy and/or epoxy and/or carboxyl unit.

2. Composition as claimed in claim 1, **characterized in that** it comprises:
-A- at least one POS carrying CFGs,
-B- at least one silane and/or one POS carrying SFGs, the latter preferably representing at least 0.5% and more preferably still at least 1% by weight of B;
-C- at least one photoinitiator system as defined in claim 1.

3. Composition as claimed in claim 1, **characterized in that** it comprises:
-C- at least one photoinitiator system as defined in claim 1
-D- at least one POS carrying CFGs and SFGs.

4. Composition as claimed in claim 1, **characterized in that** it comprises:
-A- at least one POS carrying CFGs,
-C- at least one photoinitiator system as defined in claim 1.
-D- at least one POS carrying CFGs and SFGs, the CFGs being of the (meth)acrylate and/or vinylether and/or epoxide and/or oxetane type.

5. The composition as claimed in any one of claims 1 to 4, **characterized in that** it comprises in addition:
-E- optionally at least one organic reactive diluent chosen from organic resins of the epoxide and/or vinyl ether and/or oxetane type;
-F- optionally at least one organic or inorganic pigment;
-G- optionally a filler, preferably a silicic filler;
-H- optionally at least one photosensitizer, preferably selected from (poly)aromatics (optionally metallic) and/or heterocyclics.

6. The composition as claimed in any one of claims 2 or 5, **characterized in that** the POSs taken as compound A as defined in claim 2 are epoxysilicones and/or vinylether silicones which are:
either linear or substantially linear and consist of units of formula **(II.1),** ending with units of formula **(II.2),**
or cyclic and consisting of units of formula (II.1): 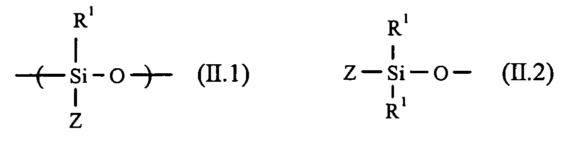
in which formulae:
• the symbols R¹ are similar or different and represent:
- either a linear or branched C₁-C₆ alkyl radical optionally advantageously substituted with one or more halogens, the preferred optionally substituted alkyl radicals being: methyl, ethyl, propyl, octyl and 3,3,3-trifluoropropyl,
- or an optionally substituted C₅-C₈ cycloalkyl radical,
- or an aryl or aralkyl radical optionally substituted:
in particular with halogens and/or alkoxyls,
the phenyl, xylyl, tolyl and dichlorophenyl radicals being most particularly selected,
- and, more preferably still, at least 60 mol% of the R³ radicals being methyls,
• the symbols Z are similar or different and represent:
- either the radical R¹,
- or a CFG group corresponding to an epoxide or vinyl ether residue linked to the silicon by means of a divalent radical advantageously containing from 2 to 20 carbon atoms optionally comprising a heteroatom,
at least one of the symbols Z corresponding to a CFG group.

7. The composition as claimed in any of claims 2 or 5, **characterized in that** the POSs taken as compound A as defined in claim 2 are epoxysilicones of the following formulae **(A.I) (A.II) (A.III):** 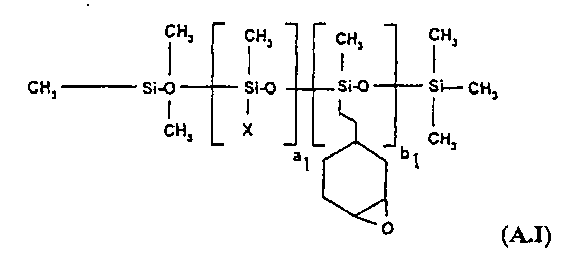 with X = CH₃; Phenyl; Cycloalkyl; C₁-C₁₈ alkyl; alkenyl; -OH; H; CH₂-CH₂-CH₂-OH; CH₂-CH₂-CF₃; -(CH₂)ₙ-CF₃, n = 1 to 20; 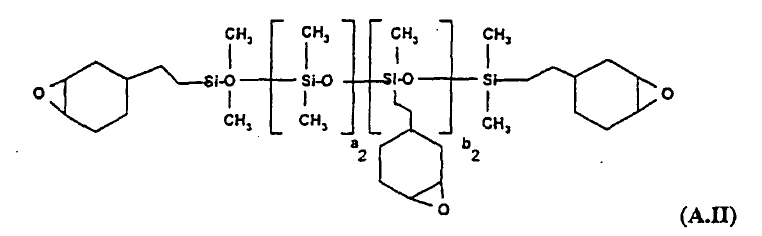
- a₁, a₂ and b₁, b₂ being defined as below in these formulae **(A.I)** and **(A.II)**
| | | |
|---|---|---|
| | 1 ≤ a₁, a₂ | 1 ≤ b₁, b₂ |
| preferably | 1 ≤ a₁, a₂ ≤ 5000 | 1 ≤ b₁, b₂ ≤ 500 |
| and more preferably still | 1 ≤ a₁, a₂ ≤ 1000 | 1 ≤ b₁, b₂ ≤ 100; |
- a₂, b₂ being = 0 in formula **(A.II)** to give the epoxydized disiloxane

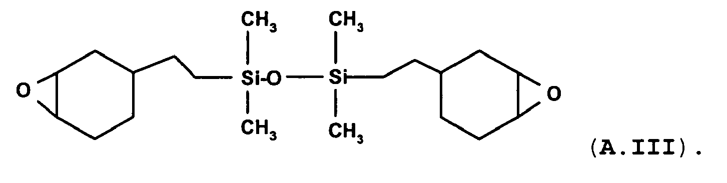

8. Composition as claimed in any one of claims 2, 5 to 7, **characterized in that** the compound(s) B is (are) chosen from that (or those) of the following formula B:
(**B**) R²ₓ[SFG]_{y}SiO_{4-(x+y)/2}
in which:
- x = 0, 1, 2 or 3
- y = 1, 2, 3 or 4
- the radicals R² are mutually identical or different and correspond to a linear or branched alkyl, a cycloalkyl, a hydroxyl, a hydrogen, a vinyl, a -CF₃, a -(CH₂)ₘ-CF₃ with m = 1 to 50,
- the SFGs are mutually identical or different and correspond to an alkoxy,
preferably: -OR³ with R³ representing a linear or branched C₁-C₃₀ alkyl or a cycloalkyl; -(OR⁴)ₚ-OR⁵; - (R⁶)_{q}-Si(OR⁷)ᵣ(R⁸)ₜ with R⁴, R⁷, R⁸ mutually identical or different and having the same definition as that given above for R³ and with R⁶ mutually identical or different and preferably corresponding to an alkylene (advantageously a methylene); p, q = 1 to 50, preferably 1 to 10; r = 1, 2 or 3 and t = 0, 1 or 2;
an enoxy,
preferably: -O-CH = CH-R⁸; - (R⁹)ᵤ-Si(OCH = CHR¹⁰)ᵥ(R¹¹)_{w}; with R⁸, R¹⁰, R¹¹ mutually identical or different and having the same definition as that given above for R³, and with R⁹ having the same definition as that given above for R⁶; u = 1 to 50, preferably 1 to 10; v = 1, 2 or 3 and w = 0, 1 or 2;
a carboxyl,
preferably: -OCOR¹²; -(R¹³)_{z}-Si(OCOR¹⁴)_{z1}(R¹⁵)_{z2}; with R¹², R¹⁴ as defined above for R⁸, R¹⁰, R¹¹; R¹³ as defined above for R⁹; and z = 1 to 50, preferably 1 to 10; z₁ = 1, 2 or 3 and z₂ = 0, 1 or 2.

9. Composition as claimed in either of claims 3 or 4, **characterized in that** the POS or the silane taken as compound D as defined in claim 3 (POS D) or in claim 4 (silane D) comprises SFGs as defined in claim 8, and CFGs of the (meth)acrylate and/or vinylether and/or epoxide and/or oxethane type, this POS or the silane D preferably comprising SFGs of the alkoxy type and CFGs of the epoxide type.

10. Composition as claimed in claim 9, wherein said POS D corresponds to the POSs of the following formulae **(D', D", D'''):** 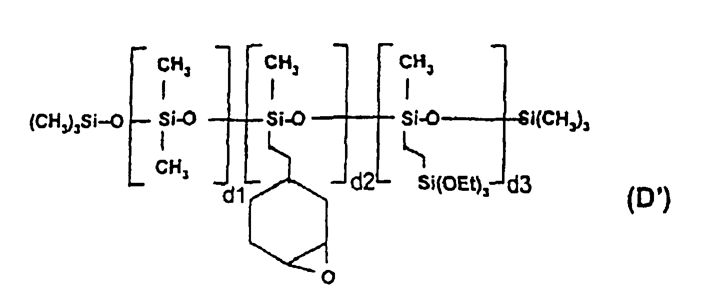 with
| | | | |
|---|---|---|---|
| | 0 ≤ d₁ | 1 ≤ d₂ | 1 ≤ d₃ |
| preferably | 0 ≤ d₁ ≤ 5 000 | 1 ≤ d₂ ≤ 500 | 1 ≤ d₃ ≤ 500 |
| and more preferably still | 0 ≤ d₁ ≤ 1 000 | 1 ≤ d₂ ≤ 100 | 1 ≤ d₃ ≤ 100 |

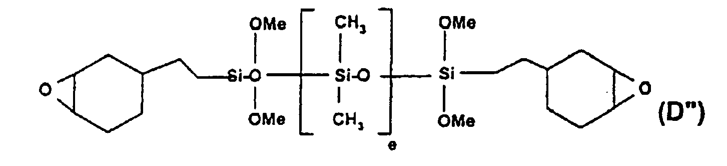

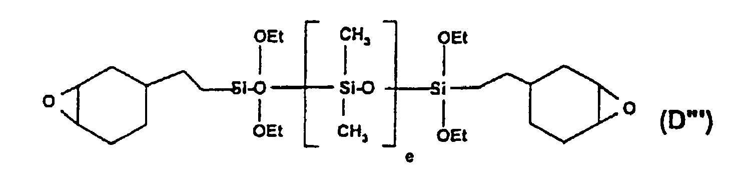
with Me = methyl; Et = ethyl
| | |
|---|---|
| | 0 ≤ e |
| preferably | 0 ≤ e ≤ 5 000 |
| and more preferably still | 0 ≤ e ≤ 1 000 |

11. Composition as claimed in claim 9, wherein said silane D corresponds to the silane of formulae D₁:

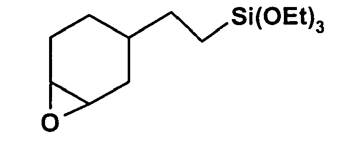

12. Application of the composition as claimed in any one of claims 1 to 11 as an antifriction varnish to a support, preferably comprising a substrate, optionally coated with at least one silicone elastomer layer.

13. Application as claimed in claim 12, **characterized in that** it essentially consists:
- in coating a support with a composition as claimed in any one of claims 1 to 11,
- and in exposing the surface thus coated to actinic radiation and/or to a beam of electrons and/or to heat, so as to cause the crosslinking of the varnish layer.

14. Varnished support having antifriction properties, as obtained by the application as claimed in claim 12 or 13.

15. Varnished support as claimed in claim 14, **characterized in that** it comprises a substrate, coated on at least one of its surfaces with at least one layer of silicone elastomer which can be crosslinked or which is at least partially crosslinked, preferably chosen from:
- the polyaddition or polycondensation RTV silicones,
- and/or the peroxide HVE silicones,
- and/or the polyaddition LSR silicones,
the antifriction varnish obtained from the composition as claimed in any one of claims 1 to 8 being applied to the (top) layer(s) of silicone elastomer.

16. Support as claimed in claim 15, **characterized in that** it is intended to be used for the manufacture of inflatable bags for the personal protection of the occupants of vehicles, thermal transfer ribbons or protective wrapping films.

17. Inflatable bag for the personal protection of the occupants of vehicles, **characterized in that** it is produced from the support as claimed in claim 15.

18. Thermal transfer ribbon, **characterized in that** it is produced from the support as claimed in claim 15.

19. Wrapping film, **characterized in that** it is produced from the support as claimed in claim 15.

## Patentansprüche

1. Silikonhaltige Zusammensetzung, vornehmlich verwendet für die Herstellung von Lack, der im Besonderen Eigenschaften im Bereich Anti-Reibung aufweist, diese Zusammensetzung ist vom Typ solcher Zusammensetzungen, die mindestens ein Polyorganosiloxan (POS) enthalten, vernetzbar durch funktionelle Vernetzungsgruppen (GFR) auf kationischem und/oder radikalischem Weg, diese Gruppen werden unter den Gruppen ausgewählt, die mindestens eine ethylenisch ungesättigte Acrylatfunktion und/oder Alkenyletherfunktion und/oder Epoxidfunktion und/oder Oxethanefunktion enthalten und eine ausreichende Menge an kationischem Initiatorsystem, das als Initiator und/oder Photoinitiator ein Produkt enthält, das aus den Oniumsalzen eines Elements der Gruppen 15 bis 17 des Periodensystems oder eines organometallischen Komplexes eines Elements der Gruppen 4 bis 10 des Periodensystems gewählt wird,
Δ davon wird eine kationische Einheit ausgewählt aus:
1) den Oniumsalzen der Formel (I):
[(R¹)ₙ - A - (R²)ₘ]⁺ (I)
Formel, in welcher:
• A für ein Element der Gruppen 15 bis 17 steht, wie zum Beispiel: I, S, Se, P oder N,
• R¹ ein carbocyclisches oder heterocyclisches Radikal der Arylgruppe in C₆-C₂₀ darstellt, das besagte heterocyclische Radikal kann als Heteroelemente Stickstoff oder Schwefel enthalten;
• R² für R¹ oder ein lineares oder verzweigtes Radikal der Alkylgruppe oder der Alkenylgruppe in C₁-C₃₀ steht; die besagten Radikale R¹ und R² sind eventuell durch eine Alkoxygruppe in C₁-C₂₅, Alkylgruppe in C₁-C₂₅, Nitro, Chlor, Brom, Cyano, Carboxy, Ester, Mercapto substituiert;
• n eine ganze Zahl zwischen 1 und v + 1 ist, v ist die Valenz des Elements A;
• m eine ganze Zahl zwischen 0 und v - 1 ist mit n + m = v + 1,
2) den Salzen des 4-oxoisothiochromanium der Strukturformel V, 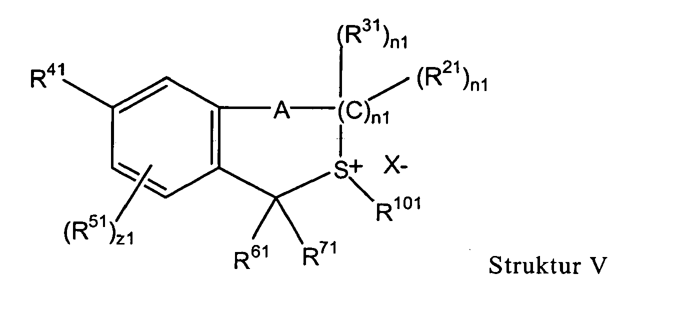 besonders das Salz des Sulfids des 2-ethyl-4-oxoisothiochromanium oder des 2-dodecyl-4-oxoisothiochromanium, in welchem
A steht für 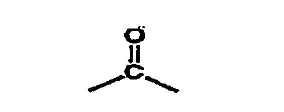 n1=1
z1 = eine ganze Zahl zwischen 0 und 3
X steht für eine Formelgruppe M¹Y¹ᵣ₁ (1) oder eine Formelgruppe Q¹(2), wo in M¹Y¹ᵣ₁ (1) : M¹ = Sb, As, P, B oder C1, Y¹ steht für ein Halogen (vorzugsweise F oder C1) oder O und wo r1 ein ganzes zwischen 4 und 6 ist, die Formel Q¹(2) steht für eine Sulfonsäure R⁸¹-SO₃ wo R⁸¹ eine Alkylgruppe oder eine Arylgruppe ist, oder eine durch ein Halogen substituierte Alkylgruppe oder eine Arylgruppe, vorzugsweise F oder Cl,
R¹⁰¹ steht für eine Alkylgruppe oder Cycloalkygruppe, vorzugsweise in C₁-C₂₀, oder eine Arylgruppe,
R²¹ steht für Wasserstoff, eine Alkylgruppe, Alcenyl, Cycloalcenyl oder Cycloalkyl, vorzugsweise in C₁-C₂₀, oder eine Arylgruppe, alle Elemente R²¹ sind voneinander unabhängig,
R³¹ steht für Wasserstoff, eine Alkylgruppe, Alcenyl, Cycloalcenyl oder Cycloalkyl, vorzugsweise in C₁-C₂₀, oder eine Arylgruppe, alle Elemente R³¹ sind voneinander unabhängig,
R⁴¹ steht für Wasserstoff, Halogen, eine Alcenylgruppe, zum Beispiel Vinyl, Cycloalcenyl, Alkyl, oder Cycloalkyl, vorzugsweise in C₁-C₂₀, eine Alkoxygruppe oder Thioalkoxy, vorzugsweise in C₁-C₂₀, eine Polygruppe (Alkylenoxid) mit bis zu 10 Einheiten Alkylenoxid begrenzt durch ein Hydroxyl oder ein Alkyl (C₁-C₁₂), eine Arylgruppe, eine Aryloxygruppe oder Thioaryloxy,
R⁵¹ steht für Halogen, eine Alkylgruppe, oder Cycloalkyl, vorzugsweise in C₁-C₂₀, eine Alcoxygruppe oder Thioalkoxy, vorzugsweise in C₁-C₂₀, eine Polygruppe (Alkylenoxid) mit bis zu 10 Einheiten Alkylenoxid begrenzt durch ein Hydroxyl oder ein Alkyl (C₁-C₁₂), eine Arylgruppe, eine Aryloxygruppe oder Thioaryloxy,
R⁶¹ steht für Wasserstoff, eine Alkylgruppe, Alcenyl, Cycloalcenyl oder Cycloalkyl, vorzugsweise in C₁-C₂₀, oder eine Arylgruppe,
R⁷¹ steht für Wasserstoff, eine Alkylgruppe, Alcenyl, Cycloalcenyl oder Cycloalkyl, vorzugsweise in C₁-C₂₀, oder eine Arylgruppe,
3) den Salzen des Sulfids in welchen die kationische Einheit Folgendes enthält:
3.1 mindestens eine Art Polysulfid der Formel III. 1. 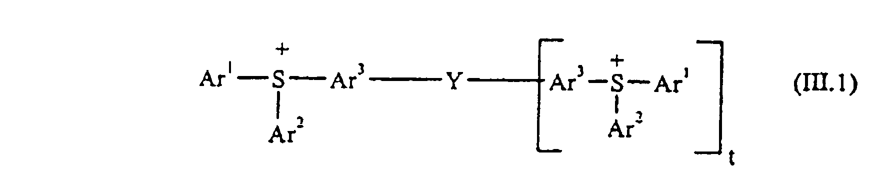 in welcher:
- die Symbole Ar¹, die untereinander identisch oder verschieden sein können, stehen jedes für ein einwertiges Radikal Phenyl oder Naphtyl stehen, eventuell substituiert mit einem oder mehreren Radikalen ausgewählt aus: einem linearen oder vernetzten Alkyradikal in C₁-C₁₂, vorzugsweise in C₁-C₆, einem linearen oder vernetzten Alkoxyradikal in C₁-C₁₂, vorzugsweise in C₁-C₆, einem Halogenatom, einer OH-Gruppe, einer -COOH-Gruppe, einer Gruppe Ester -COO-Alkyl oder der Alkalyanteil ist ein linearer oder vernetzter Rest in C₁-C₁₂, vorzugsweise in C₁-C₆, und eine Formelgruppe -Y⁴-Ar² wo die Symbole Y⁴ und Ar² die nachfolgend aufgeführten Bedeutungen haben,
- die Symbole Ar², die untereinander oder mit Ar¹ identisch oder verschieden sein können, jedes für einwertiges Radikal Phenyl oder Naphtyl stehen, eventuell substituiert mit einem oder mehreren Radikalen ausgewählt aus: einem linearen oder vernetzten Alkyradikal in C₁-C₁₂, vorzugsweise in C₁-C₆, einem linearen oder vernetzten Alkoxyradikal in C₁-C₁₂, vorzugsweise in C₁-C₆, einem Halogenatom, einer OH-Gruppe, einer -COOH-Gruppe, einer Gruppe Ester -COO-Alkyl oder der Alkylanteil ist ein linearer oder vernetzter Rest in C₁-C₁₂, vorzugsweise in C₁-C₆,
- die Symbole Ar³, die untereinander identisch oder verschieden sein können, jedes für zweiwertiges Radikal Phenylen oder Naphtylen stehen, eventuell substituiert mit einem oder mehreren Radikalen ausgewählt aus: einem linearen oder vernetzten Alkyradikal in C₁-C₁₂, vorzugsweise in C₁-C₆, einem linearen oder vernetzten Alkoxyradikal in C₁-C₁₂, vorzugsweise in C₁-C₆, einem Halogenatom, einer OH-Gruppe, einer - COOH-Gruppe, einer Gruppe Ester - COO-Alkyl oder der Alkylanteil ist ein linearer oder vernetzter Rest in C₁-C₁₂, vorzugsweise in C₁-C₆,
- t eine ganze Zahl gleich 0 oder 1 ist,
mit den zusätzlichen Bedingungen, laut deren:
+ wenn t = 0, ist das Symbol Y folglich ein einwertiges Radikal Y¹, das folgende Formelgruppe darstellt:
Y¹ : 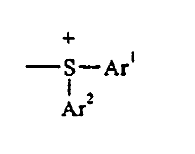 wo die Symbole Ar¹ und Ar² die vorangehend aufgeführten Eigenschaften besitzen,
+ wenn t = 1:
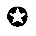 Einerseits ist das Symbol Y ein zweiwertiges Radikal mit den folgenden Bedeutungen für Y² und Y⁴:
• Y² : eine Formelgruppe: 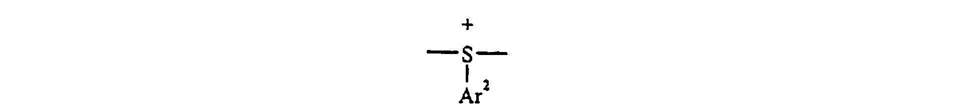 wo das Symbol Ar² die vorangehend aufgeführten Eigenschaften besitzt,
• Y³: eine einfache Valenzverbindung,
• Y⁴: ein zweiwertiger Rest ausgewählt aus: 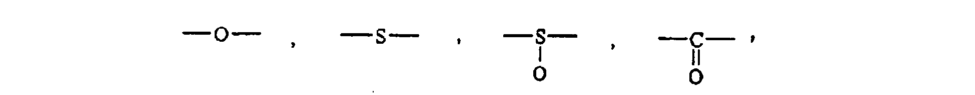
ein linearer oder vernetzter Alkylenrest in C₁-C₁₂, vorzugsweise in C₁-C₆,
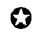 Andererseits, in dem alleinigen Fall wo das Symbol Y für Y³ und Y⁴ steht, besitzen die Radikale Ar¹ und Ar² (endständig) neben den oben aufgeführten Eigenschaften die Möglichkeit, untereinander durch den Rest Y verbunden zu werden, der aus Y¹ besteht, einer einfachen Valenzverbindung, oder aus Y², einem einwertigen Rest, der aus den Resten ausgewählt wurde, die betreffs der Definition von Y⁴ aufgeführt wurden, der zwischen den Karbonatomen liegt, die sich gegenüberliegen, die auf jedem aromatischen Ring in ortho-Stellung positioniert sind, verglichen mit dem Karbonatom, das direkt mit dem Kation S⁺ verbunden ist;
3.2 und/oder mindestens eine Art Monosulfonium, das ein einziges kationisches Zentrum S⁺ je mol Kation besitzt und in der Mehrzahl der Fälle in den Formelarten vorkommt: 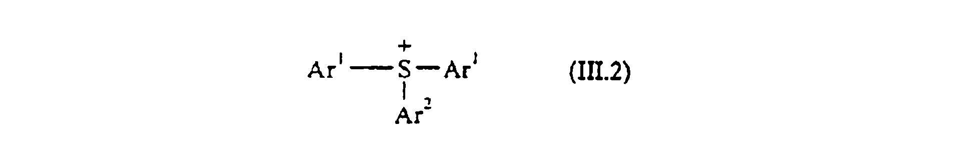
in welchen Ar¹ und Ar² die bezüglich der Formel (III.1) aufgeführten Eigenschaften besitzen, einschließlich der Möglichkeit, direkt zwischen sich ein einziges der Radikale Ar¹ und Ar² zu binden, und zwar nach der oben beschriebenen Art der Definition der zusätzlichen Bedingung die gilt, wenn t = 1 in der Formel (III.1) ist, die den Rest Y erfordert;
4) den organometallischen Salzen der Formel (IV):
(L¹L²L³M)^{+q} (IV)
in welcher:
• M für ein Metall der Gruppe 4 bis 10 steht, besonders Eisen, Mangan, Ligand, Chrom, Kobalt.
• L¹ für 1 Ligand steht, gebunden an das Metall M durch Elektronen π, Ligand ausgewählt aus den Liganden η-alkyl, η⁵-cyclopentadienyl und η⁷-cyclopheptatrienyl und den aromatischen η⁶-Verbindungen, ausgewählt aus den Liganden η⁶-Bezol eventuell substituiert und den Verbindungen mit 2 bis 4 kondensierten Ringen, wobei jeder Ring zu der Valenzschale des Metalls M durch 3 bis 8 Elektronen π beitragen kann
• L2 für ein Ligand steht, gebunden an das Metall M durch Elektronen π, Ligand ausgewählt aus den Liganden η⁷-cycloheptatrienyl und den aromatischen η⁶-Verbindungen ausgewählt aus den Liganden η⁶-Bezol eventuell substituiert und den Verbindungen mit 2 bis 4 kondensierten Ringen, wobei jeder Ring zu der Valenzschale des Metalls M durch 6 oder 7 Elektronen π beitragen kann
• L3 für 0 bis 3 identische oder verschiedene Liganden steht, gebunden an das Metall M durch Elektronen σ, Ligand(en) ausgwählt aus CO und NO2+; die elektronische Gesamtlast q des Komplexes, zu welchem L¹, L² und L³ und die ionische Last des Metalls M beitragen, ist positiv und gleich 1 oder 2;
Δ die anionische Einheit hat die Formel:
[X¹X²ₐR_{b}]⁻
Formel, in welcher:
- a und b ganze Zahlen sind, und zwar a zwischen 0 bis 6 und b zwischen 0 bis 6 mit a+b ≥ 2;
- Die Symbole X¹ für Elemente stehen, die aus den Gruppen 3a, 4a, 5a des Periodensystems ausgewählt werden, vorzugsweise aus der Gruppe mit: B, P und Sb; die Symbole X² stehen für:
❖ ein Halogenatom (Chlor, Fluor) mit a = 0 bis 3,
❖ eine Funktion OH mit a = 0 bis 2,
- die Symbole R identisch oder verschieden sind und für Folgendes stehen:
➢ ein Phenylradikal, substituiert durch mindestens eine elektronenanziehende Gruppe wie zum Beispiel, CF₃, OCF₃, NO₂, CN, und/oder durch mindestens 2 Halogenatome (besonders Fluor), und dies wenn die kationische Einheit ein Onium eines Elements der Gruppen 15 bis 17 ist
➢ ein Phenylradikal, substituiert durch mindestens eine elektronenanziehende Gruppe wie zum Beispiel, CF₃, OCF₃, NO₂, CN, und/oder durch mindestens 2 Halogenatome (besonders Fluor), und dies wenn die kationische Einheit ein organometallischer Komplex eines Elements der Gruppen 4 bis 10 ist
➢ ein Arylradikal, das mindestens zwei aromatische Kerne hat wie zum Beispiel Biphenyl, Naphtyl, eventuell substituiert durch mindestens ein elektronenanziehendes Element oder eine elektronenanziehende Gruppe, besonders ein Halogenatom (besonders Fluor), CF₃, OCF₃, NO₂, CN, unabhängig von der kationischen Einheit;
diese Zusammensetzung ist **dadurch** charakterisiert, dass sie unter anderem Moleküle enthält, die substituiert sind durch sekundäre funktionelle Gruppen (GFS), die mindestens ein Siliciumatom pro Molekül tragen und ausgewählt werden aus denen, die mindestens ein Grundmolekül Alcoxy und/oder Enoxy und/oder Carboxy tragen.

2. Zusammensetzung gemäß Anspruch 1, charakterisiert **dadurch**, dass sie Folgendes enthält:
-A- mindestens ein Polyorganosiloxane (POS) Träger der sekundären funktionellen Gruppe (GFS)
-B- mindestens ein Silan und/oder Polyorganosiloxane Träger der sekundären funktionellen Gruppe (GFS), letztere stellen vorzugsweise mindestens 0,5 % dar und oder mindestens 1 % in Gewicht von B;
-C- mindestens ein Photoinitiatorsystem wie in Anspruch 1 beschrieben.

3. Zusammensetzung gemäß Anspruch 1, charakterisiert **dadurch**, dass sie Folgendes enthält:
-C- mindestens ein Photoinitiatorsystem wie in Anspruch 1 beschrieben
-D- mindestens ein Polyorganosiloxane (POS) Träger der funktionellen Vernetzungsgruppe (GFR) und der sekundären funktionellen Gruppe (GFS).

4. Zusammensetzung gemäß Anspruch 1, charakterisiert **dadurch**, dass sie Folgendes enthält:
-A- mindestens ein Polyorganosiloxane (POS) Träger der funktionellen Vernetzungsgruppe (GFR)
-C- mindestens ein Photoinitiatorsystem wie in Anspruch 1 beschrieben
-D- mindestens ein Silan Träger der funktionellen Vernetzungsgruppe (GFR) und der sekundären funktionellen Gruppe (GFS), vom Typ (Meth)Acrylat und/oder Vinylether und/oder Epoxid und/oder Oxethan.

5. Zusammensetzung gemäß einem der Ansprüche 1 bis 4, charakterisiert **dadurch**, dass sie unter anderem Folgendes enthält:
-E- eventuell mindestens ein reaktiver organischer Verdünner, ausgewählt aus den organischen Harzen des Typs Epoxid und/oder Vinylether und/oder Oxethan;
-F- eventuell mindestens ein organisches oder inorganisches Pigment;
-G- mindestens ein Füllstoff, vorzugsweise auf Siliciumbasis
-H- eventuell mindestens ein Photosensibilisator, vorzugsweise ausgewählt aus den (poly)aromatischen (eventuell metallisch) und oder den heterocyclischen Photosensibilisatoren.

6. Zusammensetzung, gemäß einem der Ansprüche 2 oder 5, charakterisiert **dadurch**, dass die Polyorganosiloxane (POS) als Verbindung A definiert in Anspruch 2, Epoxid-Silikone und/oder Vinylether-Silikone sind, die:
→ Linear oder deutlich linear sind und gebildet sind aus Grundmolekülen der Formel (II.1), begrenzt durch die Grundmoleküle der Formel (II.2),
→ Cyclisch sind und gebildet sind aus Grundmolekülen der Formel (II.1): 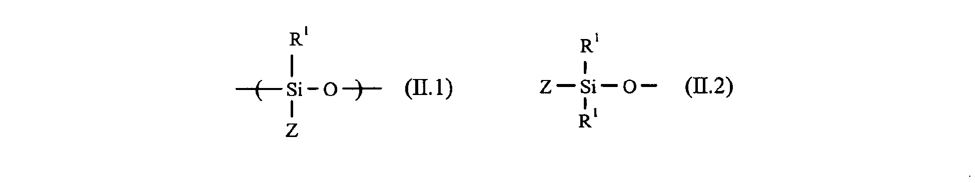
Formel, in welcher:
• die Symbole R¹ ähnlich oder verschieden sind und Folgendes darstellen:
- entweder ein lineares oder vernetztes Alkylradikal in C₁-C₆, eventuell substituiert, vorteilhafterweise durch ein oder mehrere Halogene, die bevorzugten substituierten Alkylradikale sind: Methyl, Ethyl, Propyl, Octyl, und 3,3,3 t
- Trifluoropropyl,
- oder ein Cycloalkylradikal en C₅-C₈, eventuell substituiert,
- oder ein Arylradikal oder Aralkylradikal, eventuell substituiert:
vor allem durch Halogene und/oder Alkoxyle,
die Radikale Phenyl, Xylyl, Tolyl und Dichlorophenyl werden besonders ausgewählt,
• die Symbole Z ähnlich oder verschieden sind und Folgendes darstellen:
- entweder das Radikal R¹,
- oder eine funktionelle Vernetzungsgruppe (GFR) entsprechend einem Rest Epoxid oder Vinylether, verbunden mit dem Silicium durch ein einwertiges Radikal, welches vorteilhafterweise zwischen 2 und 20 Karbonatome enthält, die eventuell ein Heteroatom enthalten,
mindestens eins der Symbole Z entspricht einer funktionellen Vernetzungsgruppe (GFR).

7. Zusammensetzung gemäß einem der Ansprüche 2 oder 5, charakterisiert **dadurch**, dass die Polyorganosiloxane (POS) als Verbindung A definiert in Anspruch 2 Epoxidsilikone der folgenden Formeln (A.I) (A.II) (AIII) sind: 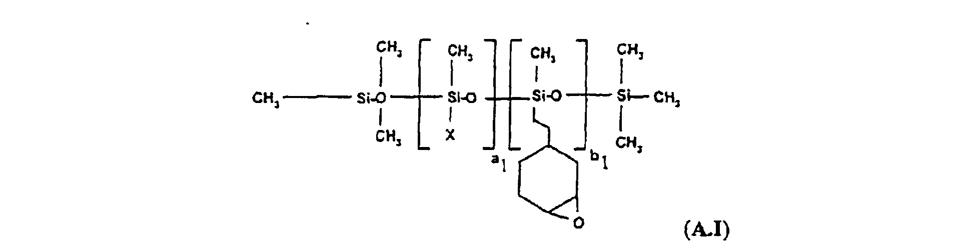 mit X = CH₃; Phenyl, Cycloalkyl, Alkyl C₁-C₁₈; Alcenyl;
- OH; H; CH₂-CH₂-CH₂-OH; CH₂-CH₂-CF₃; -(CH₂)ₙ-CF₃ n = 1 bis 20; 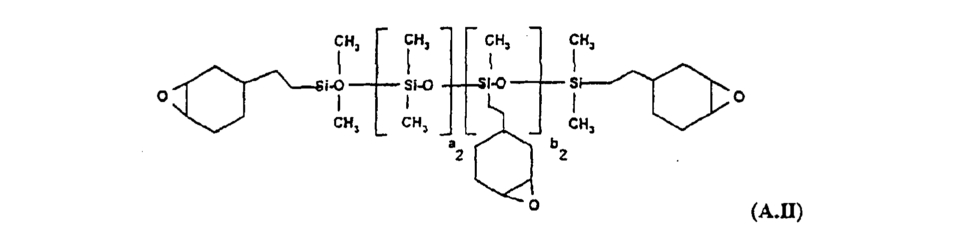
- a₁, a₂ und b₁, b₂ sind wie folgt in diesen Formeln (A.I) und (A.II) definiert
| | | |
|---|---|---|
| | 1 ≤ a₁, a₂ | 1 ≤ b₁, b₂ |
| vorzugsweise | 1 ≤ a₁, a₂ ≤ 5000 | 1 ≤ b₁, b₂ ≤ 500 |
| noch bevorzugter | 1 ≤ a₁, a₂ ≤ 1000 | 1 ≤ b₁, b₂ ≤ 100; |
- a₂, b₂ sind = 0 in der Formel (A.II) um das epoxidierte Disiloxan zu geben

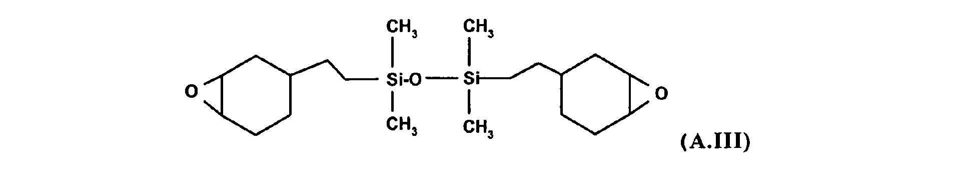

8. Zusammensetzung gemäß einem der Ansprüche 2, 5 bis 7, charakterisiert **dadurch**, dass die Verbindung(en) B ausgewählt wird (werden) aus der (oder den) folgenden Formel(n) B:
(**B**) R²ₓ[GFS]_{y}SiO_{4-(x+y)/2}
in welcher:
- x = 0, 1, 2 oder 3
- y = 1, 2, 3, oder 4
- die Radikale R² untereinander identisch oder ähnlich sind und einem linearen oder verzweigten Alkyl, einem Cycloalkyl, einem Hydroxyl, einem Wasserstoff, einem Vinyl, einem -CF3, einem -(CH₂)ₘ-CF₃ entsprechen mit m = 1 bis 50,
- die (GFS) untereinander identisch oder verschieden sind und folgendem entsprechen:
· Alkoxy,
vorzugsweise:
-OR³ mit R³ die ein lineares oder verzweigtes Alkyl in C₁-C₃₀ darstellen oder ein Cycloalkyl,
-(OR⁴)ₚ-OR⁵; -(R⁶)_{q}-Si(OR⁷)ᵣ(R⁸)ₜ
mit R⁴, R⁷, R⁸ untereinander identisch oder verschieden und entsprechend der gleichen Definition wie die oben aufgeführte Definition für R³ und mit R⁶ untereinander identisch oder verschieden und vorzugsweise entsprechend eines Alkylens (vorteilhafterweise ein Methylen); p, q = 1 bis 50, vorzugsweise 1 bis 10; r = 1, 2 oder 3 und t = 0, 1 oder 2;
· Enoxy,
vorzugsweise:
-O-CH = CH-R⁸ ;
-(R⁹)ᵤ-Si(OCH = CHR¹⁰)ᵥ(R¹¹)_{w} ;
mit R⁸, R¹⁰, R¹¹ untereinander identisch oder verschieden und entsprechend der gleichen Definition wie die oben aufgeführte Definition für
R³, und mit R⁹ entsprechend der gleichen Definition wie die oben aufgeführte Definition für R⁶;
u = 1 bis 50 vorzugsweise 1 bis 10,
v = 1, 2 oder 3 und w = 0, 1 oder 2;
Carboxy,
vorzugsweise:
-OCOR¹²;
-(R¹³)_{z}-Si(OCOR¹⁴)_{z1}(R¹⁵)_{z2};
mit R¹², R¹⁴ wie oben definiert für R⁸, R¹⁰, R¹¹;
R¹³ wie oben definiert für R⁹;
und
z = 1 bis 50 vorzugsweise 1 bis 10,
z₁ = 1, 2 oder 3 und z₂ = 0, 1 oder 2.

9. Zusammensetzung, gemäß einer der Ansprüche 3 oder 4, charakterisiert **dadurch**, dass die (POS) oder das Silan als Verbindung D definiert wie in Anspruch 3 (POS D) oder in Anspruch 4 (Silan D) (GFS) enthält wie in Anspruch 8 definiert und (GFR) des Typs (Meth)Acrylate und/oder Vinylether und/oder Epoxid und/oder Oxethan, das (POS) oder das Silan D enthalten vorzugsweise (GFS) des Typs Alcoxy und (GFR) des Typs Epoxid.

10. Zusammensetzung gemäß des Anspruchs 9 in welcher das besagte /POS D) dem (POS) der folgenden Formeln (D', D", D''') entspricht: 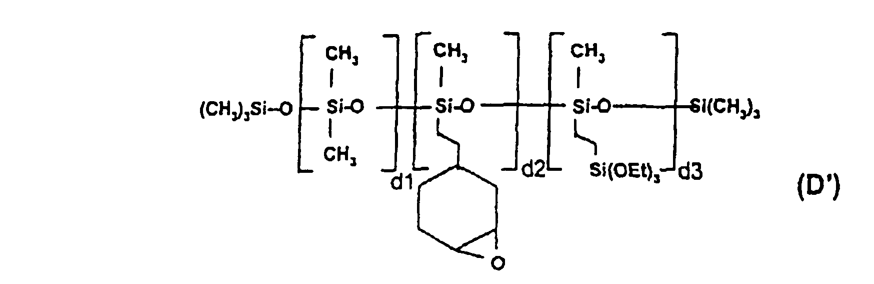
| | | | |
|---|---|---|---|
| mit | 0 ≤ d₁ | 1 ≤ d₂ | 1 ≤ d₃ |
| vorzugsweise | 0 ≤ d₁ ≤ 5000 | 1 ≤ d₂ ≤ 500 | 1 ≤ d₃ ≤ 500 |
| noch bevorzugter | 0 ≤ d₁ ≤ 1000 | 1 ≤ d₂ ≤ 100 | 1 ≤ d₃ ≤ 100 |

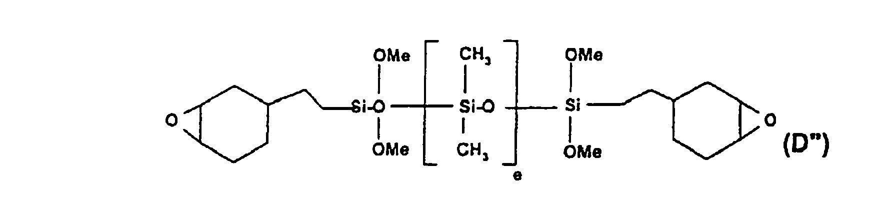

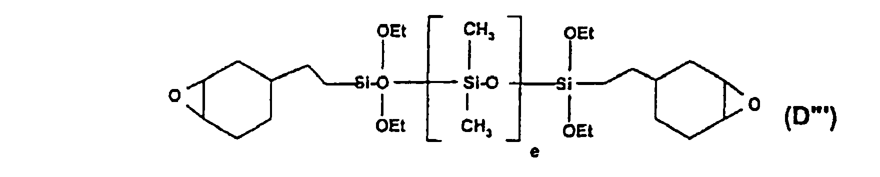
mit Me = Methyl; Et = Ethyl
| | |
|---|---|
| | 0 ≤ e |
| vorzugsweise | 0 ≤ e ≤ 5000 |
| noch bevorzugter | 0 ≤ e ≤ 1000. |

11. Zusammensetzung gemäß des Anspruches 9, in welchem das Silane D dem Silane der Formel D₁ entspricht:

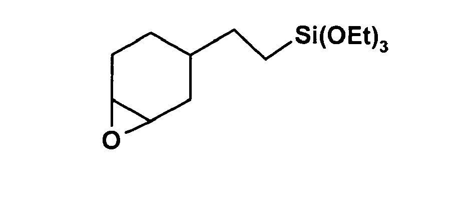

12. Anwendung der Zusammensetzung gemäß einer der Ansprüche 1 bis 11 für Anti-Reibungs-Lack auf einem Träger, der vorzugsweise ein Substrat enthält, eventuell beschichtet mit mindestens einer Schicht Silikonelastomere.

13. Anwendung gemäß Anspruch 12, charakterisiert **dadurch**, dass sie im wesentlichen daraus besteht:
- einen Träger mit Hilfe der Zusammensetzung gemäß einem der Ansprüche 1 bis 11 zu überziehen
- und die überzogene Oberfläche actinischer Strahlung und/oder einem E-lektronenbündel und/oder Hitze auszusetzen, zur Vernetzung der Lackschicht.

14. Lackträger hat Anti-Reibungs-Eigenschaften, wie durch die Anwendung gemäß Anspruch 12 oder 13 gewonnen.

15. Lackträger gemäß Anspruch 14, charakterisiert **dadurch**, dass er ein Substrat enthält, aufgetragen auf mindestens einer seiner Flächen mit mindestens einer vernetzbaren Schicht Silikonelastomere oder mindestens teilweise vernetzt, welche vorzugsweise ausgewählt wird aus:
- RTV-Silikone Polyaddition oder Polykondensation
- und/oder EVC-Silikone mit Peroxyd
- und/oder LSR-Silikone Polyaddition
der Anti-Reibungs-Lack, gewonnen aus der Zusammensetzung gemäß einem der Ansprüche 1 bis 11, wird auf die (obere(n)) Schicht(en) Elastomeresilikon aufgetragen.

16. Träger gemäß Anspruch 15, charakterisiert durch die Bestimmung zur Herstellung von aufblasbaren Kissen zum individuellen Insassenschutz in Fahrzeugen, von Thermo-Farbbändern oder Verpackungsschutzfolien.

17. Aufblasbares Kissen zum individuellen Insassenschutz in Fahrzeugen, charakterisiert **dadurch**, dass es ausgehend von dem Träger gemäß Anspruch 15 hergestellt wird.

18. Thermo-Farbband, charakterisiert **dadurch**, dass es ausgehend von dem Träger gemäß Anspruch 15 hergestellt wird.

19. Verpackungsfolie, charakterisiert **dadurch**, dass sie ausgehend von dem Träger gemäß Anspruch 15 hergestellt wird.
